# EUROPEAN PATENT APPLICATION

(11) **EP 0 667 579 A1**
(43) Date of publication of application: **16.08.1995**
(21) Application number: 94202313.6
(22) Date of filing: 12.08.1994
(51) Int. Cl.: G06F 12/08

(54) **Cache for optical storage device**

(30) Priority: 09.02.1994 US 193991; 09.02.1994 US 194104
(71) Applicant: Ballard Synergy Corporation, Silverdale, Washington 98383 (US)
(72) Inventor: Ballard, Clinton L., Bremerton, Washington 98312 (US)
(74) Representative: Smulders, Theodorus A.H.J., Ir.

(57) **Abstract**

5n7 A cache (100) for improving access to optical media (70) includes a primary cache (102) comprising RAM (88) and a secondary cache (104) comprising a portion of hard disk memory (60). Multiple aspects of the invention are defined: (1) Cache data discrimination: Discrimination methodology is implemented for determining when data should not be cached. Under certain conditions, caching of data is less likely to improve access time. (e.g., when the transfer rate is already exceeding a critical sustained throughput rate; when an estimated time to complete a CD-ROM data request is within a specific percentage of the estimated time to complete a hard drive disk request). (2) Secondary cache fragmentation avoidance: To keep the access time to secondary cache faster than the access time to the optical media, fragmentation of the secondary cache (104) (i.e., hard disk (60)) is minimized. To do so, constraints are imposed: (i) an entire CD-ROM request is stored in contiguous sectors on the hard drive; (ii) sequential CD-ROM requests to adjacent sectors of CD-ROM (70) are concatenated on the hard drive (60); (iii) data redundancy is permitted; and (iv) first-in first-out criteria is used for overwriting data. (3) Alternative update methodologies: Cache updates are performed in sequence or in parallel to primary (102) and secondary (104) cache depending upon the embodiment. (4) Data integrity: Integrity of data stored in non-volatile secondary cache (104) is maintained for a substantial portion of secondary cache through power failures, shutdowns and media swaps.

## Description

### NOTICE REGARDING COPYRIGHTED MATERIAL

A portion of the disclosure of this patent document contains material which is subject to copyright protection. The copyright owner has no objection to the facsimile reproduction by anyone of the patent document or the patent disclosure as it appears in the public Patent and Trademark Office file or records, but otherwise reserves all copyright rights whatsoever.

### BACKGROUND OF THE INVENTION

This invention relates to cache subsystems for improving access to data stored on a mass storage device. More particularly this invention relates to a cache subsystem, including a hard disk drive, for improving "access time" for information stored on an optical storage device.

Access time, in the context of microcomputer memory handling, is the time it takes a memory system to present information to a microprocessor after an address has been selected. Cache is a memory subsystem for improving access time to data stored in main or "mass" memory. The cache subsystem characteristically comprises memory having a faster access time than main memory. It is by duplicating frequently-accessed main-memory data values in cache memory that access times for such data is improved.

There are several types of main memory sources in conventional microcomputers. Sources include floppy disks, hard disks and optical storage media. Caches comprising random access memory (RAM) are common for improving access time to data stored on such disks or media. RAM has an access time of approximately 150 nano-seconds (ns). This is several orders of magnitude faster than access times for mass storage devices. For example, access time for a conventional PC floppy disk drive is on the order of seconds. Access time for a conventional PC hard drive is approximately 12-60 milliseconds (ms). Compact disk read only memory (CD-ROM), one form of optical storage media, has a storage capacity of approximately 680 megabytes and an access time of approximately 300-1000 ms. Top of the line CD-ROM drives advertise access times down to 265 ms.

When RAM prices were speculated to significantly decrease, discussion of main memory systems comprising RAM were considered by chip manufacturers. Such price decreases have not occurred. To the contrary, the relative expense of RAM makes it a precious resource in the computer. It is currently unfeasible to dedicate tens of megabytes of RAM to serve as a high-capacity cache. According to this invention, however, it is desirable to define a high-capacity cache for improving access times for CD-ROM or other high capacity optical media.

Programmers typically optimize information layout on a CD-ROM to achieve the current CD-ROM access times. Straight sequential access of optical media as during video playback or audio playback typically can occur within desired specifications to provide a user with acceptable visual and sound quality. When random seeks, however, are interspersed with full-motion video and/or sound, performance (i.e., average access time) degrades. For typical multimedia and hypermedia applications, audio/video data is interspersed with program and/or graphics data. In a conventional CD-ROM encyclopedia application, a user may spend 90% of the time accessing program and graphics data and just 10% of the time accessing audio-video or animation data. (The CD-ROM itself may comprise 50% data and 50% video/audio due to the storage intensiveness of video/audio.) A conventional CD-ROM drive meeting multimedia specifications requires a sustained throughput rate of 150 KB/second. It is the occasions when random seeks are interspersed with the full motion video or animation that problems typically arise. Using a conventional RAM cache of approximately 256 KB, the cache will fill with audio-video data very quickly. There already is significant contention for the RAM resources by the operating system. Using all of the available cache for maintaining full motion video would be unacceptable. Accordingly, a larger high-capacity cache is needed.

As RAM costs approximately $80/MB in 1994, implementation of a high-capacity cache would run approximately $1600 for merely a 20 MB high-capacity cache. Such an implementation is unfeasible. Accordingly, there is a need for an alternative structure for implementing a CD-ROM cache. In particular, there is a need for a more cost-efficient, yet technically-effective high-capacity cache structure.

Under conventional microcomputer operating conditions, a cache improves access time some of the time. Of significance is that there are transient periods during which the cache is not improving microcomputer performance. This is because conventional cache implementation methodologies call for caching substantially all data transfers. This is inefficient. It is generally accepted that 80-90% of computing time is spent processing 10-20% of the code/data, while the other 10-20% of the time is spent processing the other 80-90% of the code/data. It is for the frequently executed 10-20% of code/data that a cache provides increased performance. Caching the remaining code/data leads to little, if any, performance increase. In a CD-ROM application, however, caching this other 90% of the code/data may consume a significant portion of cache resources. For a high-capacity cache it is too costly to allocate tens of megabytes of space to this 80-90% of code/date that is infrequently accessed. Accordingly, there is a need for a more effective cache implementation which optimizes cache usage.

As described in the summary of invention and detailed description, applicant's cache, according to several embodiments, includes a portion of hard disk memory. A hard disk drive provides access times generally 10 times faster than CD-ROM access times. However, when data files stored on a hard disk are fragmented, hard drive access performance degrades. If the degradation causes access to be no faster than access to a CD-ROM, there is no point in using the hard disk as a cache. Accordingly, it is desirable to minimize fragmentation of a hard disk area being used for cache.

As a high capacity cache will take a significant period of time to fill up, it is desirous to preserve the cache contents in the event of media changes (e.g., CD-ROM changes) and power shutdowns. Accordingly, there is a need for a non-volatile cache and a need for associating stored data with a particular CD-ROM.

### SUMMARY OF THE INVENTION

According to the invention, a cache for improving access to optical media includes a primary cache and a secondary cache wherein the primary cache is formed by RAM and the secondary cache is formed by a portion (i.e., all or less than all space) of a hard disk memory.

According to one aspect of the invention, discrimination methodology is implemented for determining when optical media data should not be cached. Under certain conditions, caching of data transfers does not improve access to optical media data. For example, if a data transfer from CD-ROM exceeds a critical sustained throughput rate, then caching is not likely to improve access time. Thus, such transfer is not cached. Under an alternate condition, if the estimated time to complete an optical media data request is within a specific percentage of the estimated time to complete a hard drive disk request, then the benefit may be insignificant. Again, such request is not cached.

According to another aspect of the invention, fragmentation of data stored on the hard disk portion of cache is minimized by imposing storage constraints. As fragmentation deteriorates hard drive access time, fragmentation is minimized and avoided. To do so, entire CD-ROM requests are stored in contiguous sectors on the hard drive. Also, sequential CD-ROM requests to adjacent sectors of the CD-ROM are concatenated on the hard drive, so that the multiple CD-ROM requests are stored in contiguous sectors of the hard drive. Data redundancy in the cache is even permitted because it leads to avoidance of fragmentation. Redundant data is stored when the data already exists in cache among overlapping (i.e., in two or more stored requests), non-aligned (i.e., starts at different location than either of overlapping requests) storage requests. Lastly, compounding fragmentation symptomatic of conventional discard schemes is avoided by implementing first-in first-out criteria for overwriting cache locations.

According to another aspect of the invention, cache updates are performed in parallel to both primary and secondary cache.

According to another aspect of the invention, data stored in cache is associated with a specific optical disk to avoid invalidating data when optical disks are changed and rechanged. Specifically, a tag is defined for each sector of optical disk stored in cache. The tag is formed by combining the data's optical disk sector number with an index corresponding to an assigned optical disk number. The optical disk number is assigned from root directory and header information unique to the optical disk.

According to another aspect of the invention, integrity of data stored in non-volatile secondary cache is maintained across power failures and shutdowns. According to a preferred embodiment, all cached data in non-volatile memory is valid upon recovery except a relatively small portion (e.g., 254 KB out of 20 MB or larger cache file).

According to alternative embodiments of the invention, technologies other than the preferred RAM and hard disk structures can be used for primary cache and secondary cache. The constraint for defining the structural technologies is that the primary cache have an access time as fast or faster than secondary cache and that the secondary cache have either one or both of a faster access time or faster transfer speed rating than the optical storage device. For example, flash memory or bubble memory could be used for primary cache, while flash memory, bubble memory or a faster read-write optical drive could be used for secondary cache. According to another embodiment, a single level high-capacity cache (e.g., portion of hard disk drive) is implemented for accessing an optical media.

One advantage of this invention is that average data access times for optical media can be improved for many microcomputer multimedia, hypermedia, animation and other video, audio-video and graphical applications. Another advantage is that the cache structure can be implemented with existing resources on a microcomputer by allocating a portion of system RAM and a portion of a user's hard drive. Cache implementation software defines the cache structure and controls operation. By implementing a high-capacity cache filled up over a period of hours or weeks and maintaining the integrity of cache data across shutdowns and CD-ROM swaps, performance improvements are maintained over the long term, (rather than following a latent period of use after each "power on" or "media swap"). Accordingly, a cost-efficient, technically-effective cache is implemented for improving access times for optical storage media.

The invention, its aspects and advantages will be better understood by reference to the following detailed description taken in conjunction with the accompanying drawings.

### BRIEF DESCRIPTION OF THE DRAWINGS

Fig. 1 is a block diagram of an exemplary microcomputer system environment for hosting the optical media cache of this invention.
Fig. 2 is a block diagram of the memory subsystem and processor of the environment of Fig. 1.
Fig. 3 is a block diagram of the optical media cache according to one embodiment of this invention.

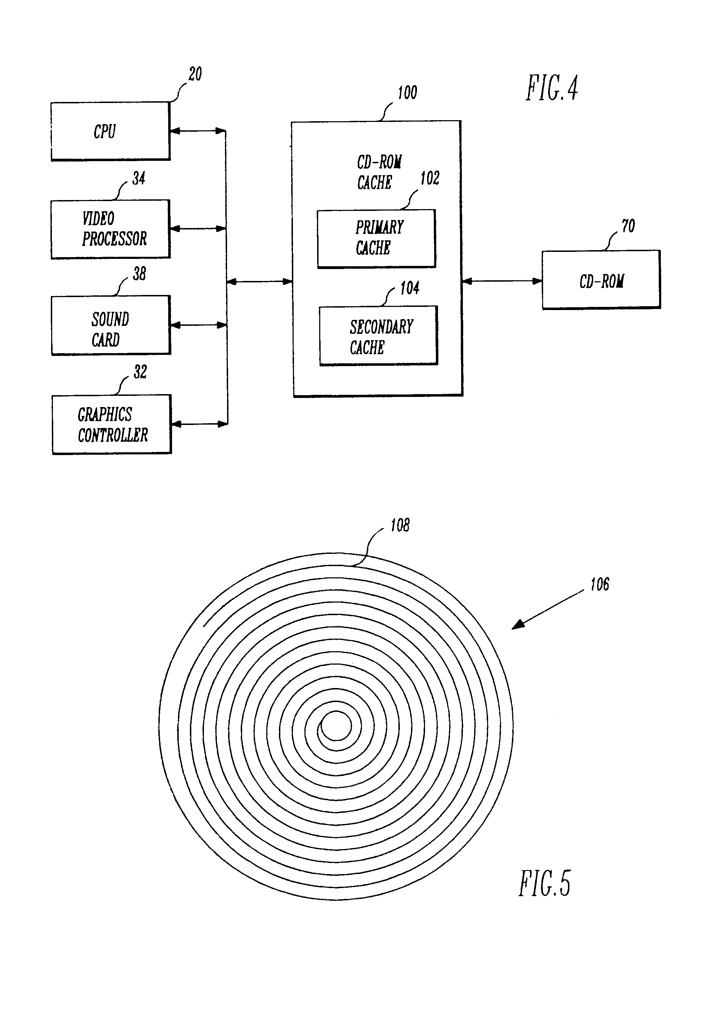

Fig. 4 is a block diagram of a CD-ROM cache embodiment of this invention.
Fig. 5 is a diagram of track layout for a CD-ROM.
Fig. 6 is a flow chart of the cache implementation software according to one embodiment of this invention.
Fig. 7 is a flow chart of data discrimination processing according to one embodiment of this invention.
Fig. 8 is a flow chart of data discrimination processing according to another embodiment of this invention.
Fig. 9 is a flow chart of data discrimination processing according to yet another embodiment of this invention.
Fig. 10 is a diagram showing the relationship between a transfer key variable and (i) a directory of CD-ROM identification codes, (ii) CD-ROM sector layout and (iii) hashing tables, according to an embodiment of this invention.
Fig. 11 is a flow chart of cache update processing according to a parallel update embodiment of this invention.
Fig. 12 is a flow chart of cache update processing according to a two-stage update embodiment of this invention.
Fig. 13 is a logical diagram of the cache file according to one embodiment of this invention.

### DESCRIPTION OF SPECIFIC EMBODIMENTS

### Exemplary Environments for the Optical Media Cache

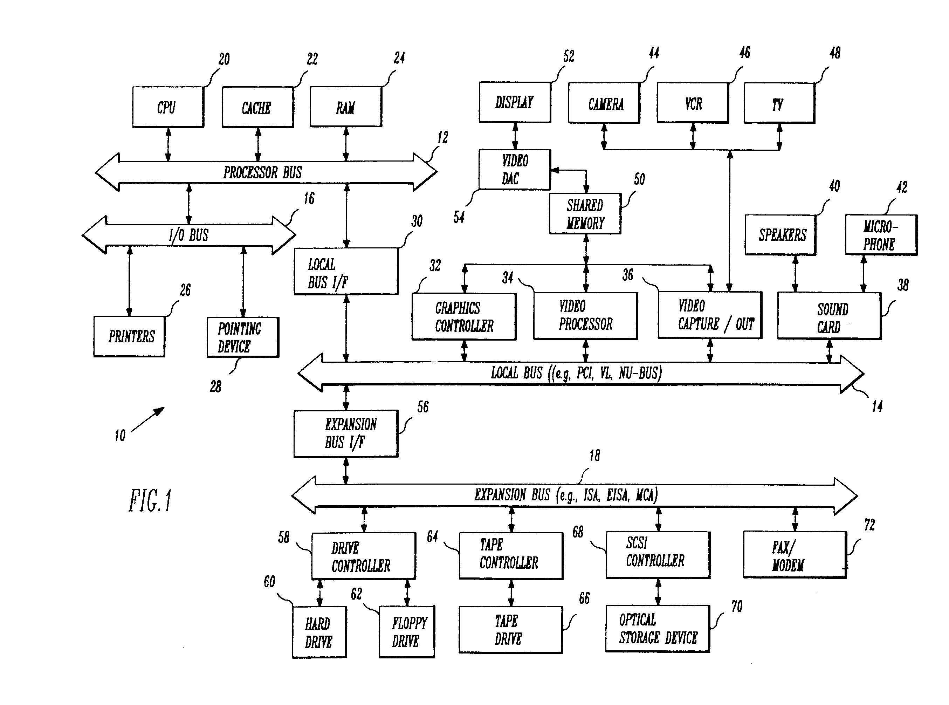

Fig. 1 shows a microcomputer system architecture 10 which would benefit from the optical media cache of this invention. The microcomputer 10 includes a central processing unit 20, system memory (e.g., 22,24), multiple communication busses 12, 14, 16, 18 and several system components and peripherals. The microcomputer 10 may be a work station, personal computer, or any of several other standardized and proprietary general purpose or embedded microcomputers. The number and types of communication busses, system components and peripherals may vary. For the microcomputer 10 shown, there is a processor bus 12, local bus 14, I/O bus 16 and expansion bus 18. A CPU 20, external cache 22 and system RAM 24 are located on the processor bus. An I/O bus 16 is linked to the processor bus 12 for interfacing to I/O ports. A printer 26 and pointing device 28 (e.g., mouse) typically are coupled to the I/O bus 16 via I/O ports (not shown).

A local bus 14 is linked to the processor bus 12 via a local bus interface 30. Exemplary local busses are the video local (VL) or VESA-standard bus, the peripheral component interface (PCI) bus and the NU-BUS. The PCI bus, for example, may couple up to 10 peripheral devices. Illustrated are a graphics controller 32, video processor 34, video capture/output card 36 and a sound card 38. Such peripherals are used in multimedia and audio-video production systems. Speakers 40 and a microphone 42 are linked to the sound card. A camera 44 (e.g., camcorder), VCR 46 and TV 48 are linked to the video capture/output card 36. The video subsystems 32, 34, 36 typically share a local memory resource (i.e., frame buffer or video RAM) 50. Information is passed to a display 52 from the video subsystems and shared memory 50 via a video DAC 54.

An expansion bus 18 is linked to the processor bus 12 via the local bus 14 and an expansion bus interface 56. Peripherals, system components and mass storage devices typically are coupled to the expansion bus 18. Shown are a drive controller 58 coupling to a hard disk drive 60 and a floppy disk drive 62, a tape controller 64 coupling to a tape drive 66, a SCSI controller 68 coupling to an optical storage device 70 or other SCSI peripheral, and a fax/modem 72. As an alternative to the SCSI controller 68, any of several proprietary controllers also may couple to an optical storage device 70. According to other architectures the hard drive 60 and/or the optical storage device 70 (e.g., CD-ROM) and there respective controllers instead may be coupled to the local bus 14.

In summary, the optical media cache of this invention may benefit many alternative single or multiple microprocessor based architectures 10, including proprietary work stations, personal computers, PENTIUM machines, APPLE MACINTOSH machines, and other machines currently available or to come based on the Intel 80X86 architecture, Motorola 68XXX architecture, other CISC processor architectures, and oncoming RISC processor and multiprocessor architectures.

### Memory Subsystem and Optical Media Cache

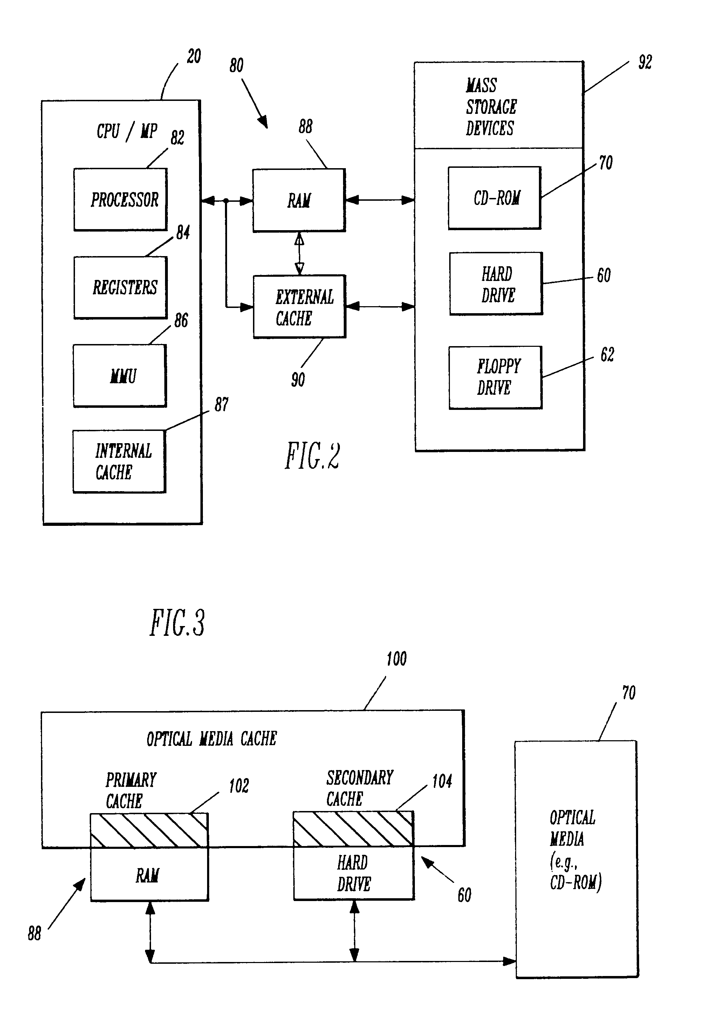

Fig. 2 shows an exemplary memory subsystem 80 supporting the CPU 20 of architecture 10. In one embodiment, the CPU 20 includes a processing unit 82, registers 84, a memory management unit 86 and an internal cache 88. A memory subsystem includes system RAM 88, external cache 90 and mass storage devices 92. The mass storage devices 92 shown include CD-ROM 70, hard disk drive 60 and floppy disk drive 62. Access times to data increase in order among the following storage mechanisms: registers 84, internal cache 86, external cache 90 and RAM 88, hard drive 60, CD-ROM 70, and floppy drive 62. Thus, data from a mass storage device 92 typically is transferred into RAM 88 or external cache 90 then internal cache 88 and registers 84 for access by the processor 82. More specifically, high throughput processing is best achieved by having data already in internal cache 88, external cache 90 or RAM 88 when the processor 82 needs it.

According to one embodiment, the optical media cache 100 of this invention is implemented using RAM 88 (and/or external cache 90) and hard disk drive 60. As shown in Fig. 3, a portion of RAM 88 is allocated to serve as a primary cache 102 and a portion of hard disk drive 60 is allocated to serve as secondary cache 104. The function of the optical media cache 100 is to improve access time to data stored on a CD-ROM or other optical media data source 70.

According to alternative embodiments of the optical media cache, other technologies can be used for primary cache 102 and secondary cache 104 than the preferred RAM 88 (and/or external cache 90) and hard disk 60 structures. The constraint for defining the cache levels is that the primary cache 102 have an access time as fast or faster than the secondary cache 104 and that the secondary cache 104 have a faster access time than the optical medium 70. For example, flash memory or bubble memory could be used for primary cache 102, while flash memory, bubble memory or a faster read-write optical drive could be used for secondary memory 104. According to yet another embodiment the smaller primary cache may be omitted in lieu of a single-level high-capacity cache structure.

According to a preferred embodiment, the primary cache 102 provides 0.5 MB to 2 MB of storage, while the secondary cache 104 provides at least 10 MB of storage (e.g., 20 MB to 140 MB). For the structure of Fig. 3, the secondary cache 104 is formed from an area of hard drive 60. For a DOS-based machine, such area is formed as a DOS file or a DOS partition. According to other operating systems, the area may be formed by a file, object or other operating system or user mechanism for dedicating address space to the secondary cache 104. Regardless of the operating system, it is preferable when possible that physical address space be allocated as secondary cache 104 so that the cache implementation software can avoid fragmentation of stored data.

### Problems Addressed and Solutions Derived

In deriving the optical media cache, several problems were addressed, such as how can an optical media's average access time be improved in light of the advancing needs of multimedia, hypermedia, video and animation applications. According to the invention, access time is improved by implementing a cache structure. Due to the cost-effectiveness of hard drives and the expense of RAM, a dual level cache structure comprising a smaller primary RAM cache and larger secondary hard drive cache is preferred. Using the 90/10 or 80/20 rule of thumb, 90% (80%) of the time is spent using 10% (20%) of the data. Thus, for a 680 MB CD-ROM, 68 MB or 136 MB is expected to serve as an adequate cache capacity. A secondary cache capacity of approximately 100 MB is preferred (or more generally, a capacity between 20 MB and 140 MB is preferred).

Several implementation problems of a high-capacity hard drive cache also are addressed by this invention. To optimize performance it would be useful to cache only the frequently accessed data. In addition, for a hard drive to be effective as a cache, it needs to maintain a faster access time than the optical media. According to conventional caches used for improving access to a hard disk, all data transfers are cached. As a result, the conventional cache improves performance only some of the time. If all CD-ROM transfers were cached, the primary cache and even the secondary cache would become cluttered with some of the 90% (80%) of the data that is only accessed (on average) 10% (20%) of the time. Such an implementation raises concerns as to whether performance deteriorates once the secondary cache is filled and overwritten; and whether the optical media cache expense precludes a less than optimal implementation. These concerns are dealt with by addressing the problem of how can the hard drive be implemented as a cache in an effective manner. Another problem addressed is how can CD-ROM access time be improved over an extended period of use.

To implement the hard drive as a cache in an effective manner, data discrimination methodologies are adopted. Specifically, conditions are defined for determining when not to cache optical media data transfer requests. In brief, it is intended that transfers not be cached when caching does not improve performance. Ideally, the data not cached would be the data accessed during that 10% (20%) of the time.

To maintain the hard drive at a faster access time and/or transfer rate than the CD-ROM over an extended period of use, storage constraints are defined. Specifically, there is a problem with fragmenting storage in a hard drive. If the cached data is fragmented, then the access time to such data increases. It may increase to the point that the 10:1 advantage in access time favoring the hard drive deteriorates to less than 1:1 (i.e., access to hard drive becomes as slow or slower than access to CD-ROM). Accordingly, the hard drive preferably is implemented as a contiguous area of hard drive physical address space. In addition, data from a CD-ROM data request is stored in contiguous sectors on the hard drive to avoid fragmentation.

With a high capacity cache, another problem is the latent period of time before the improved performance is realized. For example, with a 680 MB CD-ROM it may take several hours of use before a significant portion of the cache is filled. It would be inefficient to suffer such latency every time one powers up or swaps optical media. To address the media swapping problem, tags are defined using media disk information. In addition a directory of data for multiple optical disks is maintained in cache. The tag includes an identifier unique to the CD-ROM or other optical media disk from which the associated data came. When a CD-ROM is swapped, then re-swapped, the original data is still in cache and valid. According to one embodiment a FIFO method of filling cache is implemented.

To address the power shutdown problem, directory information in secondary (non-volatile) cache is updated periodically to identify any active portion of primary cache. In the event of a power failure or shutdown, data stored in non-volatile secondary cache remains valid.

To recover after a power failure/shutdown, the cache file is examined to reconstruct control variables. Cached data is stored in the cache file within groups. At power on, the last active group is identified. As data is written into the cache file in a FIFO manner, by finding the last active group, the place to start loading new data is found. Thus, a qick effective, recovery scheme is implemented. At most one group of data (i.e., the last active group) is lost.

### Cache Implementation

### Overview:

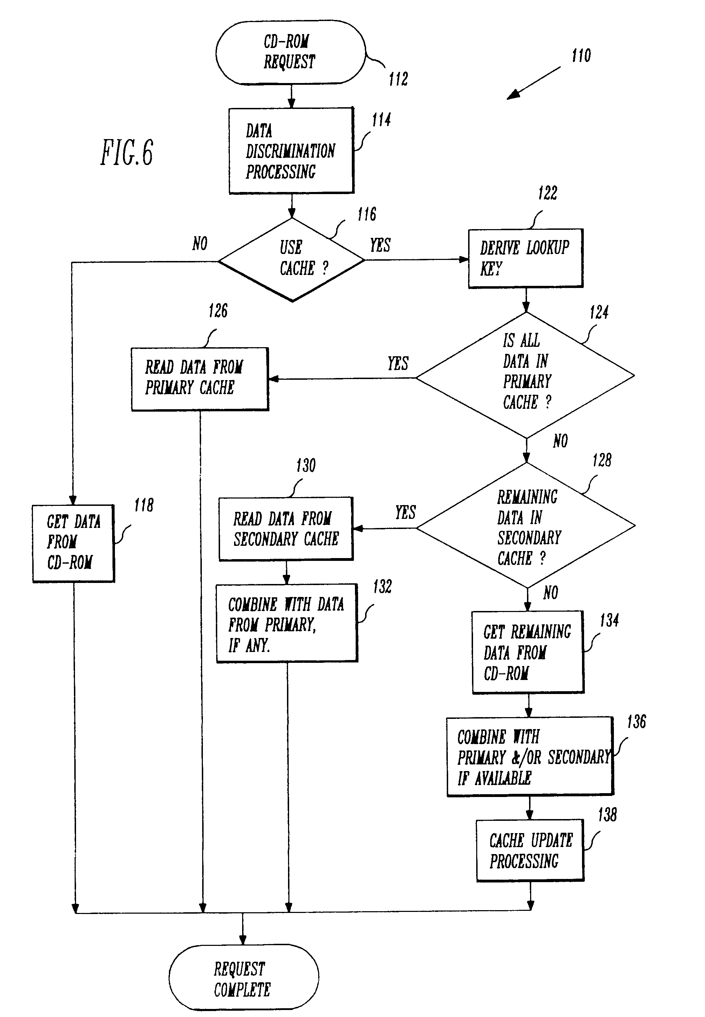

The optical media cache 100 is implemented for a CD-ROM 70 according to a preferred embodiment. Fig. 3 shows a partial block diagram of a microcomputer system implementing the CD-ROM cache 100. Application programs requiring data from CD-ROM 70 are executed by CPU 20. The CPU 20 controls data flow by directing video data to a video processor 34, audio data to a sound card 38 and graphics data to a graphics controller 32. Typically, the CPU 20 processes conventional program data. Accordingly, there may be four data streams (i.e., program data, video data, audio data and graphics data). Full motion video, for example, may require a throughput of 30-60 MB per second for an application with 24-bit color, 2.3 MB/frame (without compression) and updating at 30 frames per second (fps). Typically, the video data is compressed to achieve the sustained throughput necessary for clear full-motion video. Sound may require another 10 MB per second throughput before compression. To achieve the necessary sustained throughput, companies are optimizing performance in many areas. Fig. 5 shows the layout of a conventional CD-ROM 106. A storage track 108 spirals around and in toward the center of the disk. To optimize performance, programmers estimate frequently accessed portions and store it near the center of the disk 106. Data near the center can be accessed more quickly than data at the outer edge. In addition video compression and audio compression techniques are frequently used so that less data is needed to develop a video image or audio sound clip. The contribution of this invention is to provide an optical media cache for storing frequently accessed data in a faster storage medium.

Fig. 6 shows a flow chart for processing a CD-ROM request 112 according to an embodiment of this invention. Application programs requiring data from CD-ROM 70 trigger CD-ROM requests enabling access of data stored on a CD-ROM. Such data may be on the CD-ROM 70 or already stored in the CD-ROM cache 100. A utility program or operating system service 110 (i.e., the cache implementation software) is executed to implement the CD-ROM request 112. Typically, a total of one CD-ROM sector may be accessed with a single CD-ROM request. According to the embodiment of Fig. 6, data discrimination processing is performed at step 114 to determine at step 116 whether the CD-ROM request should use the CD-ROM cache 100. According to alternative embodiments, cache 100 is not used (1) when transfers occurring during a prior window of time (e.g., 1 second) have occurred at a rate exceeding a critical sustained throughput rate (e.g., 40 KB/sec); or (2) when an estimated time to complete a CD-ROM data request is within a specific percentage (e.g., 25%) of the estimated time to complete a hard drive disk request.

If cache 100 is not used for this data transfer, then at step 118 data is transferred from CD-ROM to RAM 24 or a processing unit for processing (e.g., to CPU 20, graphics processor 32, video processor 34, or audio processor 38). The request is then complete at step 120.

If cache 100 is used for this data transfer, then a look-up key is derived at step 122. The key is formed from an index and a sector number. The index points to an entry in a directory table specifying a particular CD-ROM. In one embodiment, the directory table holds a value for each of up to 255 CD-ROM disks. Such value is formed from data unique to the corresponding CD-ROM disk. Thus, the key identifies the CD-ROM disk and sector of the data requested via the data request. If the data is already present in the CD-ROM cache 100, the key translates to a starting location in primary and/or secondary cache using a conventional hashing table technique. Specifically, at step 124 primary cache is tested to see if all the desired CD-ROM data is already present in primary cache 102. If so, then at step 126 the data is read from primary cache 102 completing the request at step 120. In the event that only some of the data is found, in one embodiment the request is modified to request the remainder of data. Alternatively, the entire data request is passed on to check secondary cache 104. If all the data is not present in primary cache 102, then the secondary cache is tested at step 128 to determine whether all or the remaining data is present in secondary cache. If so, then at step 130 such data is read from secondary cache 104. At step 132 the data from secondary cache 104 is combined with the data from primary cache 102, if any. The request is then complete at step 120.

In one embodiment, partial hits are supported. In such case, the remainder of the data request, if any, is processed to access the remaining data from the CD-ROM 70 at step 134. At step 136, such data is then combined with the data from primary cache 102 and secondary cache 104, if any. If partial hits are not supported, the entire data request is passed to check secondary cache 104 or CD-ROM 70 to complete the request. The cache 100 is then updated to store the data request at step 138. According to a preferred embodiment, primary and secondary caches 102, 104 are updated in parallel. Conventional hashing tables, binary trees or balanced trees are alternative methods of maintaining cross-referencing between CD-ROM and cache locations. According to a preferred embodiment, when cache 102 or 104 fills up, data is discarded from the respective cache using a first-in first-out criteria. Alternatively, a least-recently-used or usage-count criteria is implemented instead. The request is then complete at step 120.

Following is more detail on data discrimination processing (step 114), the key protocol (step 122), and cache update processing (step 138).

### Data Discrimination Processing (Step 114):

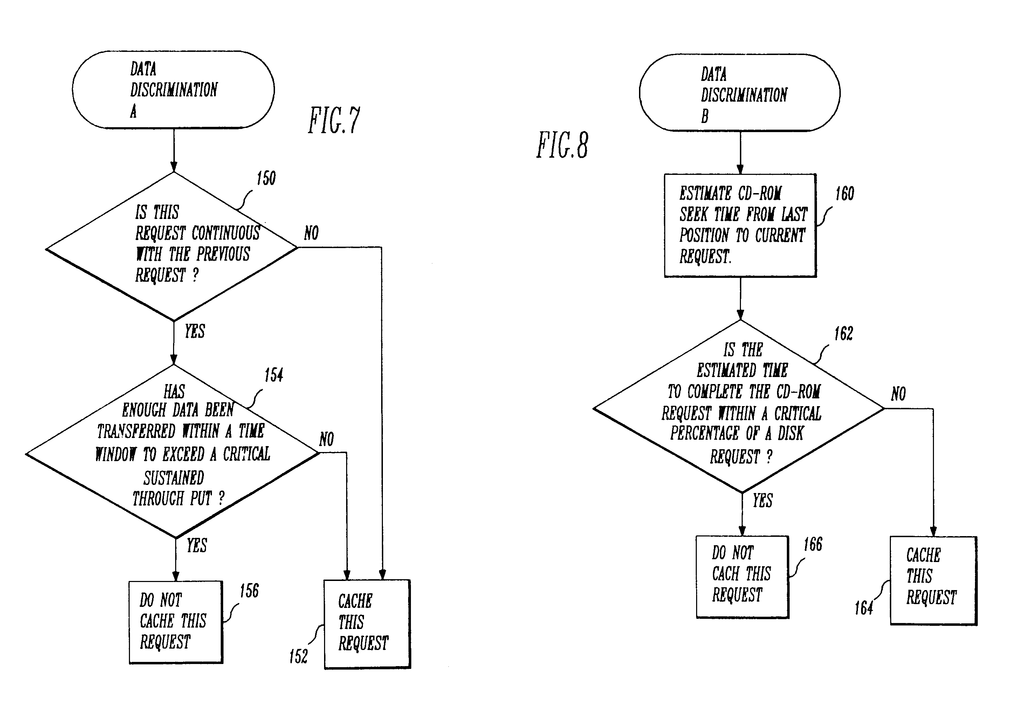

Figs. 7-9 are flow charts for three alternative discrimination processing embodiments. Referring to Fig. 7, data discrimination processing embodiment A is shown. At step 150 the data request is analyzed to determine whether the data is contiguous with data from the previous request. Data is contiguous if it is in a CD-ROM sector adjacent to the last sector from the previous data request. If not contiguous, the data is cached as designated at step 152. If contiguous, then at step 154 the software checks to see if data is being transferred at a rate exceeding a critical sustained throughput. If yes, then cache is unlikely to improve performance so the request is not cached, as designated by step 156. If no, then the request is cached, as designated by step 152.

Referring to Fig. 8, data discrimination processing embodiment B is shown. At step 160, the CD-ROM access time is estimated based on the respective sector locations of the previous request and the current request. At step 162 the estimated access time is tested to determine if it is within a specific percentage (e.g., 25%) of a hard disk access time. If not within such percentage, then the request is cached as designated at step 164. If within such percentage, then the request is not cached as designated at step 166.

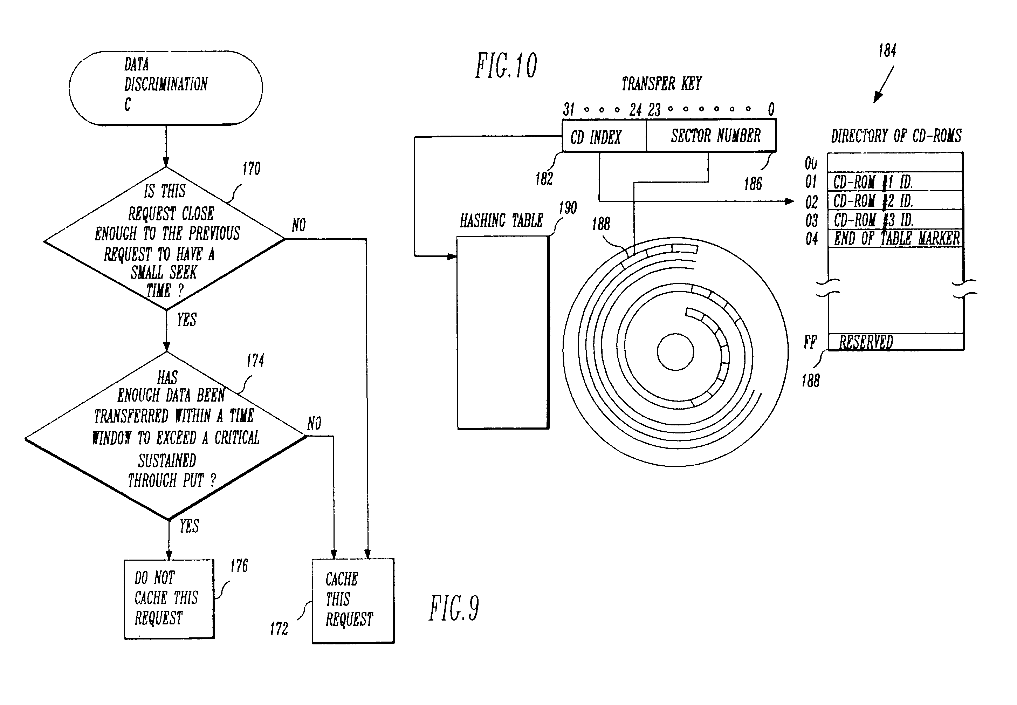

Referring to Fig. 9, data discrimination processing embodiment C is shown. At step 170, the CD-ROM sector of the data specified in the current request is compared to the sector position of the previous request to determine whether the request will have a small seek time. If not close enough, then the request is cached as designated at step 172. If close enough, then at step 174 the data transfer rate is tested to determine if enough data has been transferred within a time window (e.g., 1 sec) to exceed a critical sustained throughput. If not exceeding the critical sustained throughput, then the request is cached, as designated at step 172. If exceeding the critical sustained throughput, then the request is not cached, as designated at step 176.

### Deriving the Transfer Key (Step 122):

Accessing data in cache 100 is done via a look-up key 180. As data is to be preserved across power failures, power shutdowns and media changes, the key includes information as to the specific CD-ROM disk and sector for which the data request is directed. The key itself is a 32-bit variable. Referring to Fig. 10, in one embodiment the eight highest-order bits serve as an index 182 into a CD-ROM directory 184 located in non-volatile secondary cache 104. The remaining 24-bits 186 designate the CD-ROM sector 188 to which the request is directed. The allocation and number of bits can be varied to support additional CD-ROMS.

The eight-bit index portion points to an entry in a 256 entry directory 184. The 256 entry directory enables cache 100 to store data for up to 255 CD-ROM disks. One entry 188 (e.g., the last entry) is reserved to designate that the CD-ROM drive is empty or contains an unidentifiable disk. Other entries provide a CD-ROM identification code for identifying a unique CD-ROM disk. Each identification code stored in the directory is 64 bytes long. The first 60 bytes are taken as the first 60 bytes in a specific sector of a CD-ROM disk (e.g., sector 16 - a typical header or directory sector). The last 4 bytes represent a checksum of such sector.

The key index 182 points to the CD-ROM identification code for the current disk. When the index points to the last entry (i.e., entry location representing no disk or unidentified disk), the cache 100 is disabled.

Upon a CD-ROM request for which Cache 100 is active, the look-up key is derived. The highest-order 8-bits are determined by the current index. Such index is changed whenever the CD-ROM is changed. The lowest order 24-bits are determined from the sector address within the data request. The key then is used to determine whether the requested data is already in primary cache 102 or secondary cache 104. In one embodiment conventional hashing tables 190 are used for translating the look-up key to corresponding locations in cache 100. In other embodiments, binary trees or balanced trees are used.

### Cache Update Processing (Step 138):

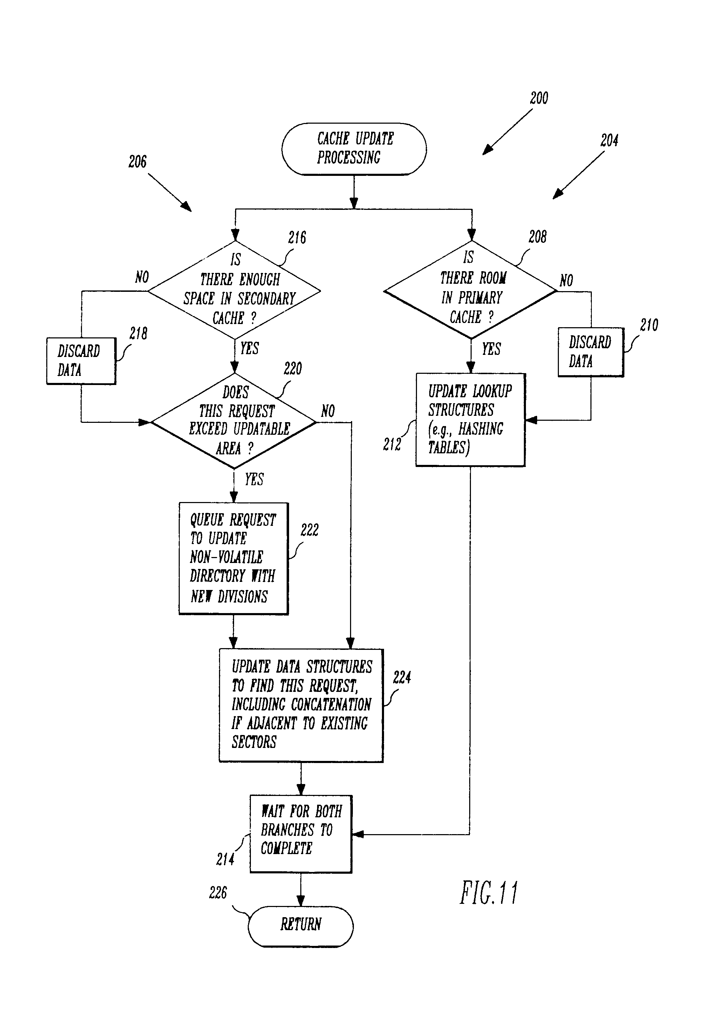

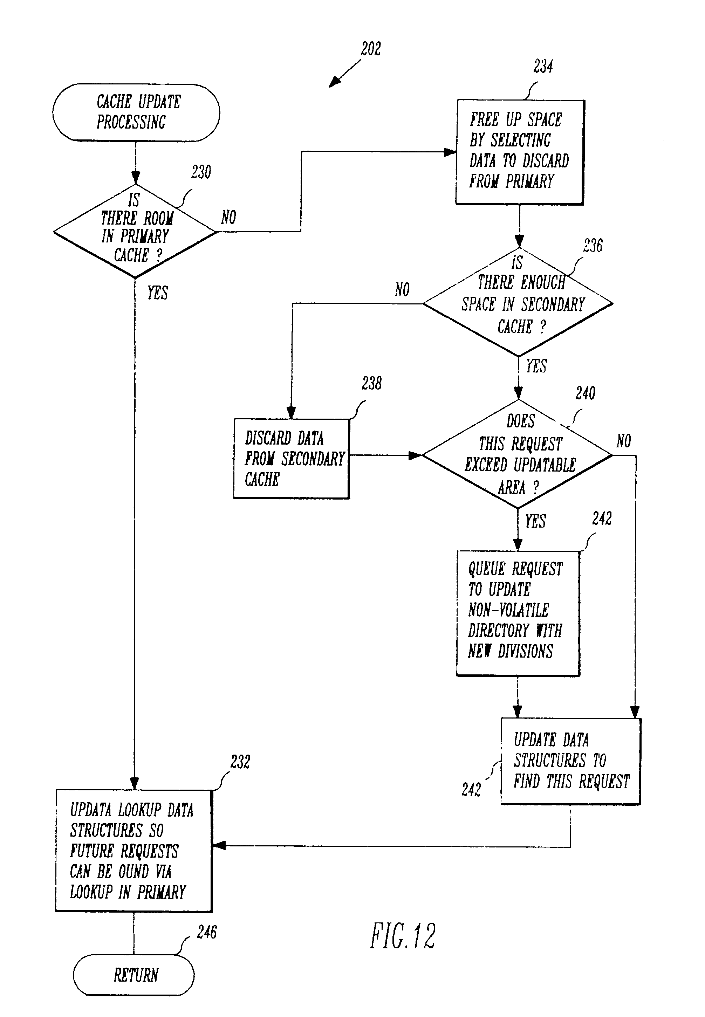

Figs. 11 and 12 show flow charts for alternative cache update processing 138 embodiments. Fig. 11 is directed to a parallel update process 200, while Fig. 12 is directed to a two-stage update process 202. Referring to Fig. 11 primary and secondary caches 102, 104 are updated in parallel. Two branches 204, 206 are executed during parallel update processing. Referring to primary cache processing branch 204, primary cache look-up tables are tested at step 208 to determine whether there is enough room in primary cache 102 to store the data request. If there is not enough room, then at step 210 the data is discarded. At step 212 the look-up tables (e.g., hashing tables) are updated. If there is room in cache 102, then the look-up tables are updated at step 212. The primary cache update branch 204 processing then is complete. At step 214, there is a wait for the secondary cache processing branch 206 to complete, if not already completed.

Referring to secondary cache processing branch 206, secondary cache look-up tables are tested at step 216 to determine whether there is room in secondary cache 104 to store the data request. If not enough room, then the data is discarded at step 218. Thereafter, or directly if there is enough space in secondary cache 104, the request is tested at step 220 to determine whether it exceeds the updatable area. If the updatable area is exceeded, then at step 222 a request is queued to update the non-volatile directory with the new divisions. Thereafter, or directly if the request does not exceed the updatable area the data structures (e.g., hashing tables) are updated at step 224 so this request can be found during future accesses. Additionally, the data is checked to see if it is adjacent to pre-existing data. If so, the new data is concatenated with the pre-existing data. In one embodiment data is written to physical sectors of the hard drive secondary cache. In another embodiment tolerating fragmentation, a conventional file system is used for writing and organizing data in cache. The secondary cache update branch 206 processing then is complete. At step 214, there is a wait for the primary cache branch 204 processing to complete, if not already completed. When both branches 204, 206 are complete cache update processing returns at step 226.

Fig. 12 shows a two-stage update process embodiment. At step 230, the primary cache look-up tables are tested to determine whether there is enough room in primary cache 102 to store the data request. If enough room (i.e., yes), then at step 232 the look-up table (e.g., hashing table) structures are updated for enabling future access to the data. If not enough room (i.e., no), then at step 234 some data in primary cache 102 is discarded to make room for the request. According to alternative embodiments, first-in first-out, least-recently-used or usage-count criteria are used to determine which data to discard. Then, at step 236 secondary cache look-up tables (e.g., hashing tables) are tested to determine whether there is enough room in secondary cache 104 to store the request. If not enough room (i.e., no), then at step 238 some data is discarded from secondary cache 104 to make room. Again, according to alternative embodiments first-in first-out, least-recently-used or usage-count criteria are used to determine which data to discard. After data is discarded (step 238) or directly after testing the space availability in secondary cache (step 236 answered yes), the request is tested at step 240 to determine whether the request exceeds the updatable area (i.e., crosses over into write-protected area). If exceeded (i.e., yes), then at step 242 the request is queued to update the non-volatile directory (e.g., portion of look-up table structures) with new divisions (i.e., boundaries between updatable and write-protected areas). After queuing (step 242) or directly after testing (i.e., step 240 answered no), the secondary cache data structures are updated at step 244 to enable future access to the data. Then, at step 232 the primary cache look-up data structures are updated to enable future access to the data. Cache update processing for the data request is then complete at step 246.

### Data Integrity Processing:

As previously described, according to a preferred embodiment the cache 100 includes non-volatile memory space. Thus, the contents of such space are not lost after a power failure or power shutdown. According to one aspect of the invention, steps are taken to maintain such data as valid even after such a power failure or shutdown. In particular, in the preferred embodiment secondary cache is updated whenever primary cache is updated. In addition, directory tables for the cache are copied from primary cache into secondary cache periodically to assure valid data as of at least the last copy of such information into secondary cache 104. According to one embodiment, the copying is performed as needed within cache update processing 200, 202 at steps 220, 222 or steps 240, 242. According to a preferred embodiment, the directory information (i.e., DIRECTORY SECTORS) are copied into secondary cache, each time a group of a specified number (e.g., 127) of CD ROM sectors are written into secondary cache 104.

Data integrity steps also are taken to maintain valid cached data through media changes. As previously described, a directory of CD-ROM identification codes is stored in secondary cache 104. Data for up to 255 CD-ROMs is maintained. A variable indicating the current CD-ROM, if any, is maintained for indexing into this table. Whenever a CD-ROM is removed, an interrupt routine changes the current CD-ROM variable to indicate no CD-ROM is present. Whenever, a CD-ROM is inserted, an interrupt routine calculates the CD-ROM identification code from information on the CD-ROM, then scans the directory to see if the code is already present in secondary cache 104. If present the index to the code is found and used for deriving the key variable during future data requests. If not present the identification code is stored in the directory at the next available index number.

### Avoiding Fragmentation in Secondary Cache 104:

Preferably, all fragmentation is to be avoided within secondary cache 104 so as to optimize cache access times. As there is no significant time penalty for fragmentation in RAM-based primary cache 102, conventional storing mechanisms are used for primary cache 102.

In the commercial embodiment, secondary cache 104 is allocated as a DOS file by the DOS operating system. DOS is most likely to allocate the file as several discontiguous physical address areas. Thus, at the start the file already is fragmented. It is an aspect of this invention to minimize fragmentation by the operating system and avoid schemes in which fragmentation compounds on itself. To avoid having the operating system add to the initial fragmentation, the cache file is defined as a write-protected hidden file. With such attributes, DOS will not allow the file to be moved around in physical address space.

To avoid fragmentation during normal operation, controls are implemented. First, when storing data in cache 104, the prior data request CD-ROM sectors are tracked to determine whether the current request is for data adjacent to the data from a prior request within an active group of the cache file. If so, it is concatenated to the prior data so that the data is contiguous in physical address space within the cache file. In addition, if a subsequent data request is for data which overlaps two data requests without sharing a common starting sector, then the requested data is stored together in physical address within the cache file. The existing data remains in cache and is valid. Thus, parts of the cache file may include redundant data. Such practice improves average access time by making it more likely to have a complete hit in cache (rather than partial hits).

In addition, to avoid compounding fragmentation as occurs using time-based discard mechanisms, a modified first-in first-out (FIFO) discard method is used for updating the cache file. For a completely contiguous cache file, the first data written in is the first data discarded once the cache file fills. However, for an initially fragmented cache file (i.e., DOS file) the FIFO scheme is modified so that a data request is not fragmented between two of the non-contiguous areas of physical address space. For example, if the cache file is formed by 3 separate physical address spaces, a data request is not divided to be stored in more than one such area. When the first area is being overwritten and a data request occurs which will not fit in the remaining space of the first area, the entire data request is written at the beginning of the second area. The FIFO scheme is considered to be a "modified" FIFO scheme because a subsequent data request will be tested to determine whether it can fit within the residual portion of the first data area. If it fits, it is stored there. If not, it is stored in the second area overwriting the next portion based on FIFO criteria.

### Cache Implementation Software

Pseudo-code for portions of the cache implementation software is included as appendix A. Cache implementation software is a system service utility for creating and maintaining the CD-ROM cache 100. The appendix includes four parts. Part 1 is pseudo-code for defining data structures for a DOS file embodiment of cache 100 located on a hard drive 60. The structures are defined at initialization, including recovery after a power failure/shutdown and start-up. Part 2 is the pseudo-code for defining support for multiple CD-ROMs. Part 3 is the pseudo-code entry for servicing a data request. Part 4 is pseudo-code for the portion of a data request service relating to updating cache in a manner which avoids fragmentation.

In a preferred embodiment, the cache implementation software is written in C language with in-line assembly code in a manner providing fast, efficient device driver code as would be appreciated by a programmer skilled in the art of DOS device driver design.

### Initialization/Recovery (See Appendix Part 1):

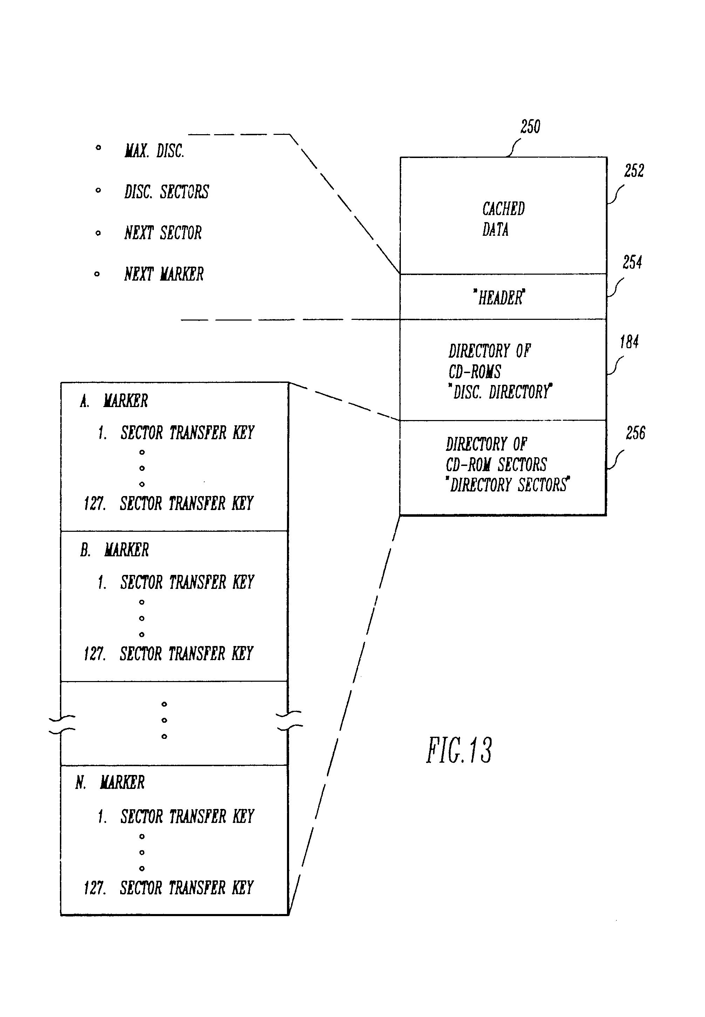

At power-up an initialization routine checks to determine whether a DOS cache-file has previously been defined. If not, then a file is created and parameters are set at initial values. If the file already exists, then this is an entry following a power failure or a power shutdown. Fig. 13 shows a logical diagram of the cache-file 250 serving as cache 100 or secondary cache 104. The file includes a cached data area 252, a header 254, a directory of CD-ROMs 184 (see Fig. 10 also), and a directory of CD-ROM sectors 256.

The header 254 includes variables MAX DISC, DISCSECTORS, NEXTSECTOR and NEXTMARKER. MAX_DISC is the next index value to assign in CD-ROM directory 184. DISCSECTORS is the number of logical disc sectors used in the cached data area 252. NEXTSECTOR is the next logical sector in the cached data area 252 for storing data. NEXTMARKER is the next value to use as a marker for adding entries into the directory of CD-ROM sectors 256.

The directory of CD-ROMs 184 is described with regard to part 2 of the appendix and is previously described in the section "Deriving the Transfer Key" (Fig. 10).

The directory 256 of CD-ROM sectors correlates cached data to CD-ROM sector addresses and is the mechanism for recovering non-volatile cache contents after a power failure or power shutdown. The cached data area 252 is managed so as to have a single 127-sector area active at one time. This area is referred to as an active group. The area corresponds to the size of 127 CD-ROM sectors. Once an active group is filled, a marker is calculated and transfer keys for each of the 127 sectors are copied into the directory 256 of sectors. If a power failure/shutdown occurs before the area fills up, then the data in the active area is invalid on recovery. As a result, only a small portion of cache is lost after a power failure or startup. The loss is taken as a tradeoff on speed. The directory 256 of sectors could be updated with every sector write into cache data area 252. This, however, would double the work resulting in slower performance. To achieve desirable speed, the sector transfer key are written in the directory 256 only after the active area fills. At such time a marker is calculated by using the NEXTMARKER value from the header 184, then incrementing the NEXTMARKER value for a subsequent access.

Because the hard drive at which file 250 is stored is non-volatile, the contents of a file survive a power loss. As described above, however, the active group in area 252 is invalid upon recovery. This is because values are not stored in the directory 256 after each update of area 252. As variables in the header 254 also may have changed before closure of the last active group, only the MAX_DISC value of header 254 is taken to be valid. Thus, DISCSECTORS, NEXTSECTOR, and NEXTMARKER are to be derived upon recovery. Once derived, such information is used to derive hashing tables or other cross-referencing look-up tables for storage in primary cache 102.

The value for DISCSECTORS is derived by allocating the DOS FAT table to determine the cache file size, then subtracting out the DIRECTORY SECTOR size and correcting for CD-ROM DIRECTORY and HEADER space. NEXTMARKER is derived by scanning through the directory 256 of CD-ROM sectors to find the last group entered. As markers are assigned in incremental order, the last group is the one before a non-successive marker number (e.g., for groups with markers 112, 113, 114, 2, 3 the last group written had marker 114.) The NEXTMARKER then is stored as the successive number (e.g., 115). NEXTSECTOR then is derived by identifying the offset from the start of the DIRECTORY SECTORS. The cache data area and DIRECTORY SECTOR area have a one-to-one correspondence. Thus, by identifying the NEXTMARKER, the NEXTSECTOR is easily identified. With the header information derived, the data in area 252, header 254, DISC DIRECTORY 184 and DIRECTORY SECTORS 256 are available for normal operation once look-up table structures (e.g., hashing tables) are derived and stored in primary cache 102.

### Maintain Support For Multiple CD-ROMs: (See Appendix Part 2)

Upon initialization/recovery, the CD-ROM drive 68 is tested to see if a CD-ROM 70 is present. If present, then its identification code is read/derived and the DISC DIRECTORY 184 tested to identify a current CD-ROM index value, and if needed a new MAX_DISC value. If not present, then the index indicates no disk present (i.e., cache disabled).

In the coded embodiment, the CD-ROM identification code is 64 bytes long. The first 60 bytes are set to be the first 60 bytes of sector 16 of the CD-ROM. This typically is header information for the CD-ROM and is likely to be unique to a given CD_ROM. However, to provide additional means of avoiding redundant codes, the last four bytes of the code are set as the checksum value of such sector 16. The derived code for the current CD-ROM is stored in the CD-ROM directory 184. The directory 184 is scanned to see if it has already been stored. If it has, then the current index is set at the index to such previously stored value. If not, then the next available index is assigned, and MAX_DISC is incremented to point to the now next available directory location.

Each time a change in media is detected (via interrupt), the code for supporting multiple CD-ROMs is executed to identify a current CD-ROM, if any.

### Data Request Service: (See Appendix Part 3)

With the cache 100 created or recovered and a current CD-ROM identified, normal operation of cache 100 follows. In one embodiment, the cache 100 is active when a valid CD-ROM is loaded. On occasion, however, the cache 100 may be inactivated by data discrimination processing (i.e., discriminator determines current data request is not to be cached). Other criteria also may be implemented to inactivate the cache 100.

For normal operation, an application program running on a host microcomputer will request data from CD-ROM. Typically this is executed as an I/O read call to the operating system. The cache implementation software of this invention hooks into the operating system as a system service/utility to process the data request.

Function check cache is called every CD-ROM I/O to determine whether the sectors of requested data are already in Cache 100. Lower level routines in_cache and in disk cache check the primary cache 102 for a hit and secondary cache 104 for a hit. Routines add_cache and add disk cache add data to the respective caches 102, 104 and update look-up tables to enable future access.

Check_cache implements data discriminator embodiment A (see Fig. 7). Throughput of data transfers from CD-ROM are monitored by counting a variable TICKS. Variables first sector and next_sector are maintained to determine whether sequential data requests are for contiguous data. If so, then the data is stored in contiguous sectors on the hard disk to avoid fragmentation.

### Avoiding Fragmentation: (See Appendix Part 4)

For the coded embodiment, secondary cache 104 is formed as a DOS file. A problem of using the conventional DOS file system is that fragmentation of the cache file can occur. This would ultimately lead to the need for defragmenting the file system, which could take many minutes. If defragmentation of the cache file were performed, each multiple sector cd rom request would end up becoming a large number of different disk requests. Since each disk request involves a seek of the head and a rotational latency, which typically combines to take 20 milliseconds, the overall throughput from the disk drive will gradually degrade to become worse than the CD-ROM drive. In one embodiment an entire DOS partition is allocated to the cache file. Such approach is impractical, however, for upgrading existing systems which already have all of the physical disk space allocated to existing partitions. In the implemented embodiment, initial fragmentation (created by the operating system) is accepted, but additional fragmentation is avoided. Avoiding additional fragmentation is achieved by allocating disk space via the file system, then write protecting the space so it will not be moved around by the operating system. By setting the DOS attributes for the cache file to be SYSTEM and HIDDEN and READ-ONLY, DOS does not further fragment the cache file. It even prevents defragmenters from moving the allocated physical sectors around.

To avoid compounding fragmentation when discarding data, additional methods are employed. When the cache file fills up, already existing data is overwritten so that the new data can be stored. In one embodiment space allocation discard algorithms are implemented. According to a first fit algorithm, space is scanned for the first already allocated area which is large enough to contain the current request. Such algorithm usually does not create additional fragmentation. In still another alternative embodiment, an exact fit algorithm is implemented to find a previously allocated area of exactly the same size would not create fragmentation. The problem with these fit-based algorithms are that they add processing overhead to the cache implementation, and fallback cases are needed when space of an appropriate size is not found.

In the implemented (preferred) embodiment, a modified first-in first-out discard criteria is used. Such an approach is fast in that it does not fail to find space. It also has the advantage of providing synergy with the initialization methods to enable fast cache recovery upon start-up (See Appendix Part 1 for recovery procedure). Still another benefit of the FIFO implementation is that the entire cache file needs to be filled completely before the current sector will be re-used.

Because the cache file may have initial fragmentation, the FIFO method as implemented is modified so that a data request is not fragmented between two non-contiguous areas of the cache file 250's physical address space. For example, if the cache file 250 is formed by 3 separate physical address spaces, a data request is not divided to be stored in more than one such area. If overwriting the first area when a data request will not fit in such area's remaining physical address space, the entire data request is instead written at the beginning of the second area. The FIFO scheme is considered to be a modified FIFO scheme because a subsequent data request will be tested to determine whether it can fit within the residual portion of the first data area. If it fits, it is stored there. If it does not fit, it is stored in the second area overwriting the next available portion using the same FIFO criteria.

To detect fragmentation at the physical level, the file system is bypassed after the cache file 250 is created. As a result, DOS's file allocation table (FAT table) is accessed to determine the actual physical layout of the file created by DOS. Once the physical layout is available, it is possible to detect if a request will fit in a physically contiguous manner. As discussed above, a first fit then can be performed in the modified FIFO approach. In the case where the cache file is very fragmented, usage of the cache file will be sub-optimal, but performance will be very close to a non-fragmented file since the only additional overhead would be the first fit scan at the physical level (this has the same number of disk I/O's).

Another problem is the potential for logical address space fragmentation caused by a users data access pattern. This happens when CD-ROM requests occur out of sequence or where the access pattern is different the second time the same sectors are accessed. Consider the following sequence:
10 sectors from 1000
10 sectors from 1020
10 sectors from 1010
10 sectors from 1005

The last request for 10 sectors from 1005 would not be contiguous at the logical sector level. Logical level fragmentation of the cache file occurs when placing non-contiguous cd rom sectors adjacent to each other. To avoid logical fragmentation, these sectors are to be stored contiguously even though every sector is already in the cache. This is an unusual approach with surprising benefit. Conventionally it is considered inefficient to store redundant information. However, by doing so the data is available from one data request storage area. This results in faster access than if the data were pieced together from 2 request storages. Fortunately, such access patterns are rare and should continue to be rare so permitting redundancy is not likely to introduce significant inefficiencies conventionally concerned with.

### Meritorious and Advantageous Effects

One meritorious effect of this invention is to improve access time to data stored on optical storage media. This provides particular advantage for multimedia, hypermedia, animation and other multiple data stream applications. Another advantage is that the cache structure can be implemented with existing resources on a microcomputer by allocating a portion of system RAM and a portion of a user's hard drive. Cache implementation software defines the cache structure and controls operation. By implementing a high-capacity cache filled up over a period of hours or weeks and maintaining the integrity of cache data across shutdowns and CD-ROM swaps, performance improvements are maintained over the long term, (rather than following a latent period of use after each "power on" or "media swap"). Accordingly, a cost-efficient, technically-effective cache is implemented for improving access times for optical storage media.

### Alternative Embodiments

According to alternative embodiments of the invention various configurations and feature subsets may be implemented. For example, a single stage high capacity cache may be implemented using a portion of the hard disk drive 70 or another high-capacity data structure.

In addition, in an embodiment in which the hard drive portion is allocated via a DOS file, more fragmentation of cached data occurs than when allocating physical address space directly. In some embodiments, data integrity across power failures and media changes is not supported.

Although the preferred embodiment is for accessing a CD-ROM, other optical media including "floptical" drives, Bernoulli drives, WORM drives, CD-I drives and magneto-optical drives may be used with the high capacity cache according to embodiments of this invention.

Although embodiments are described for a cache file or secondary cache of 10 MB or 20 MB to 140 MB, the upper limit on size is open-ended.

Accordingly, although a preferred embodiment of the invention has been illustrated and described, various alternatives, modifications and equivalents may be used. Therefore, the foregoing description should not be taken as limiting the scope of the inventions which are defined by the appended claims.

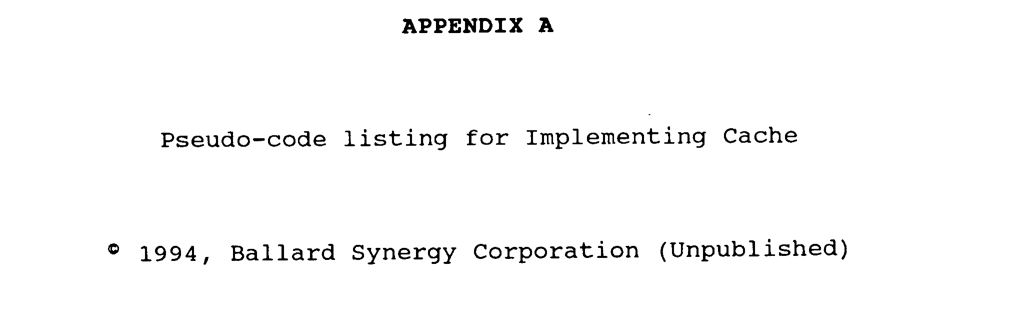

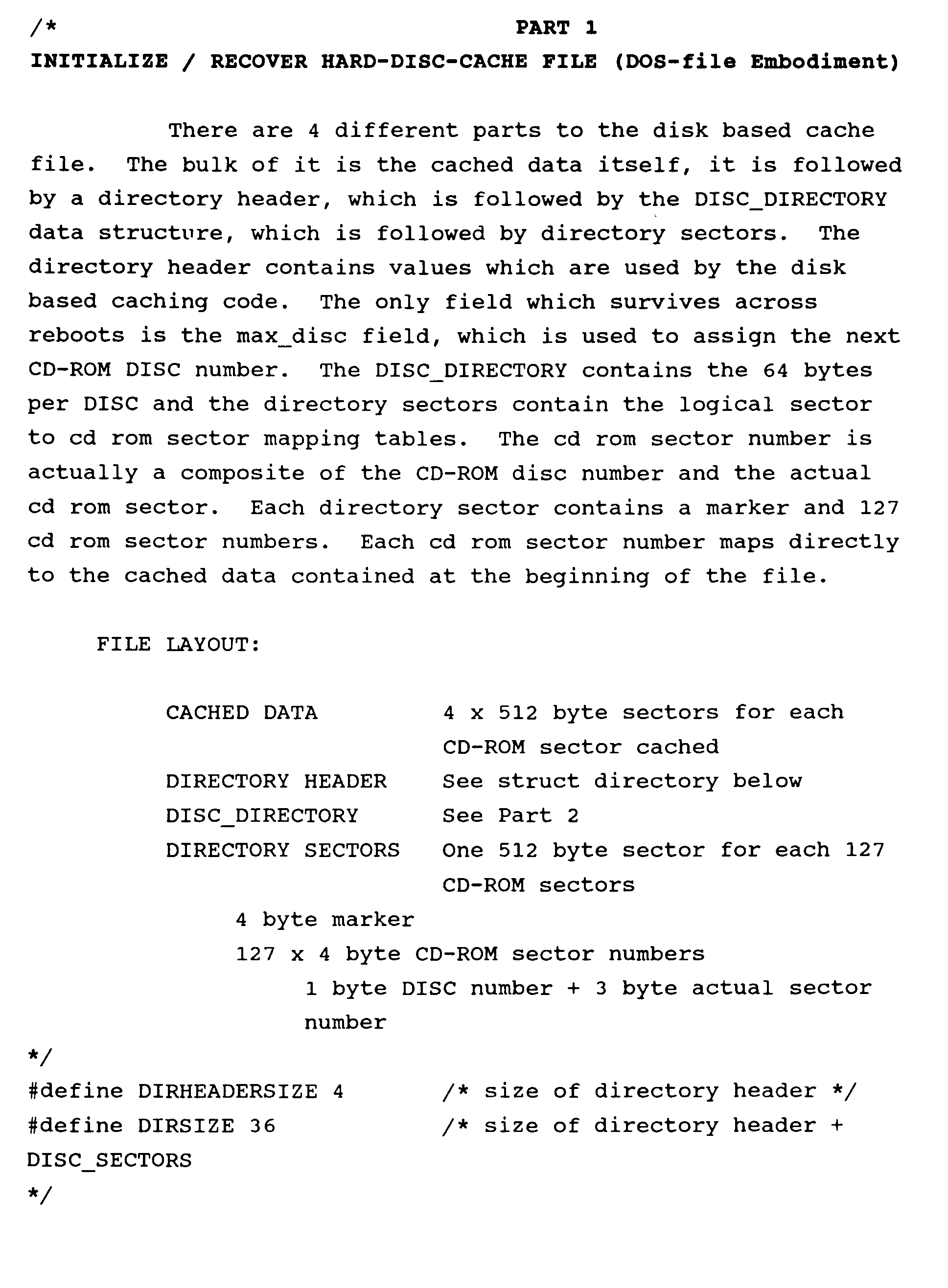

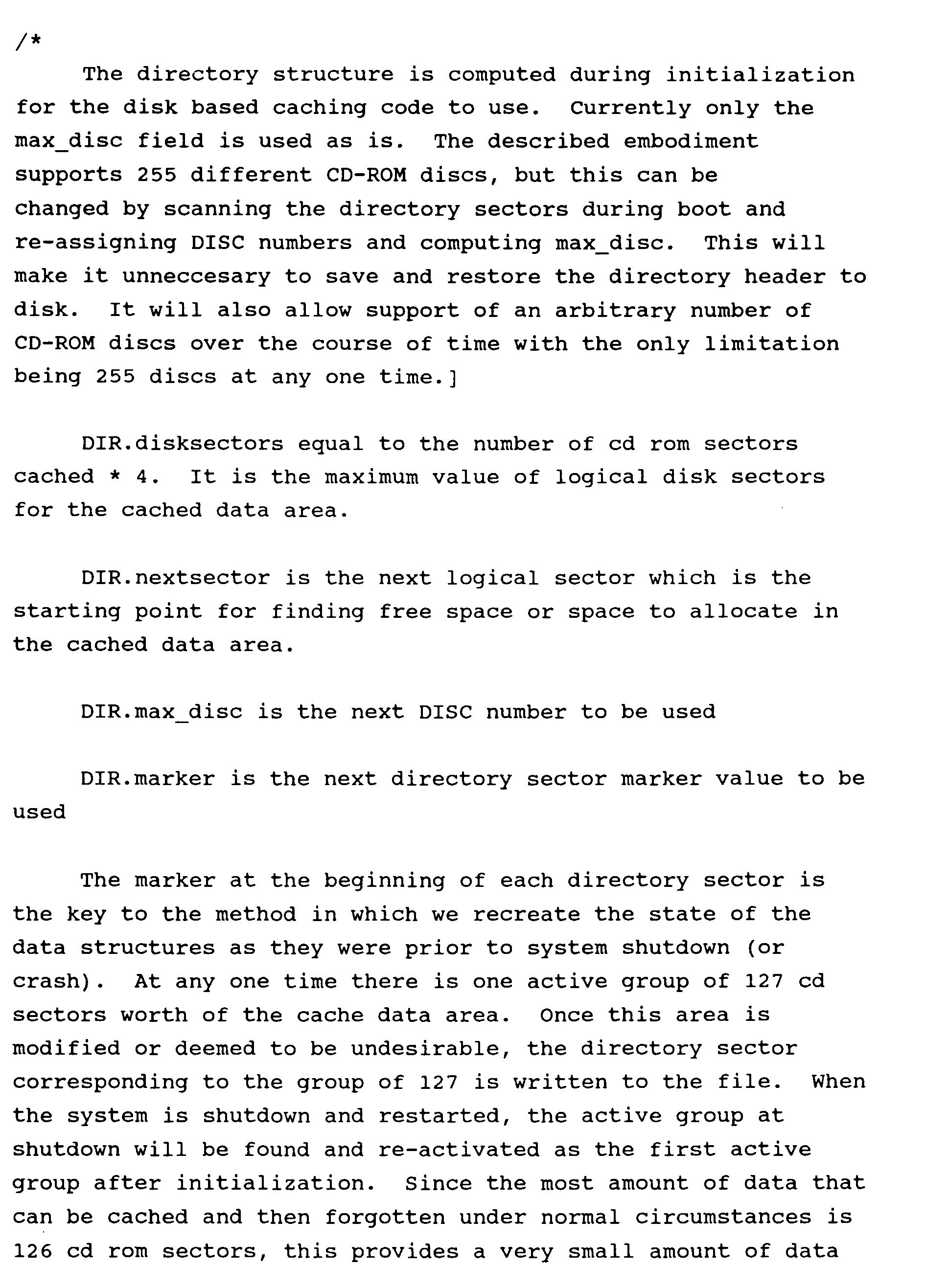

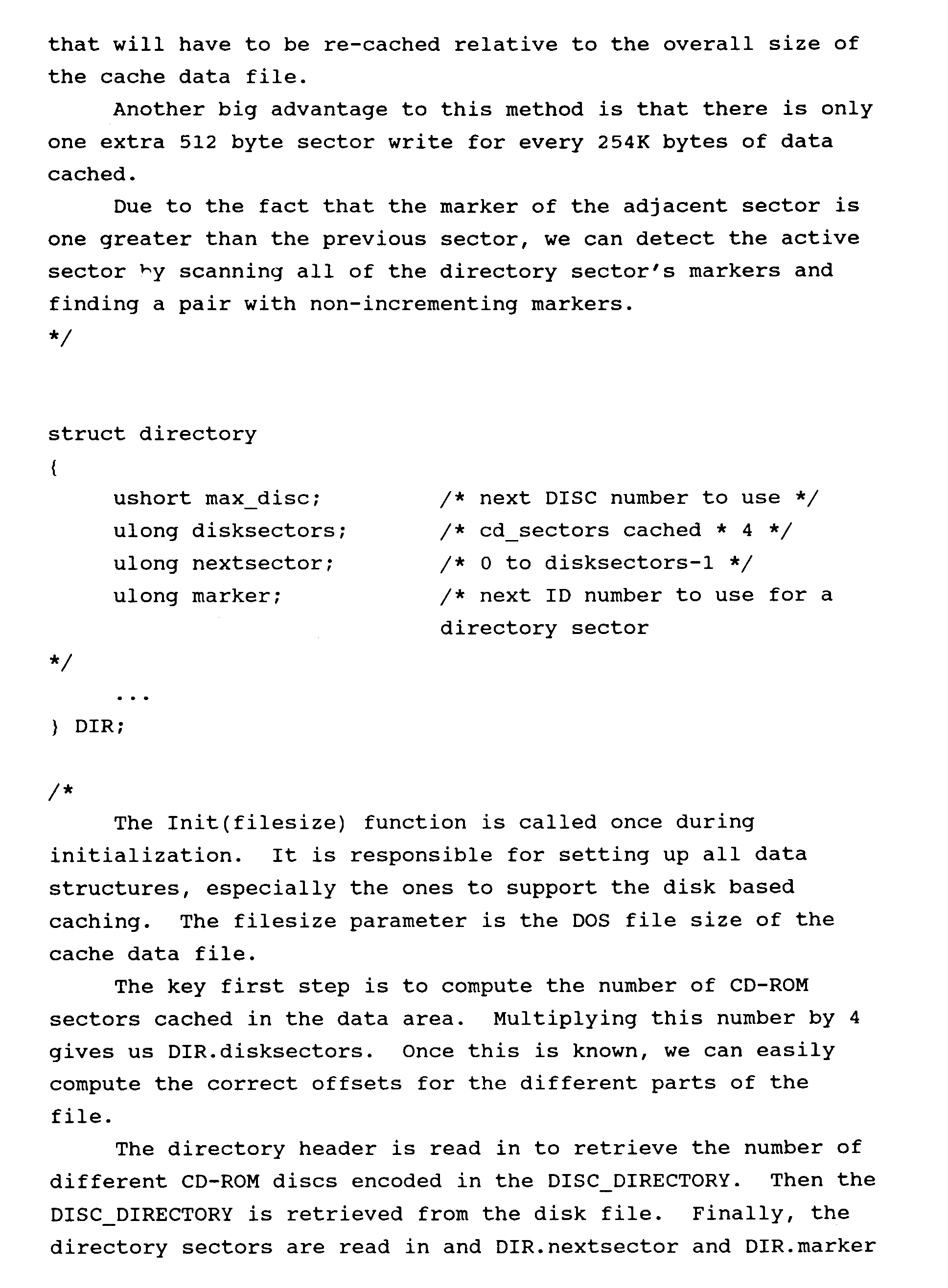

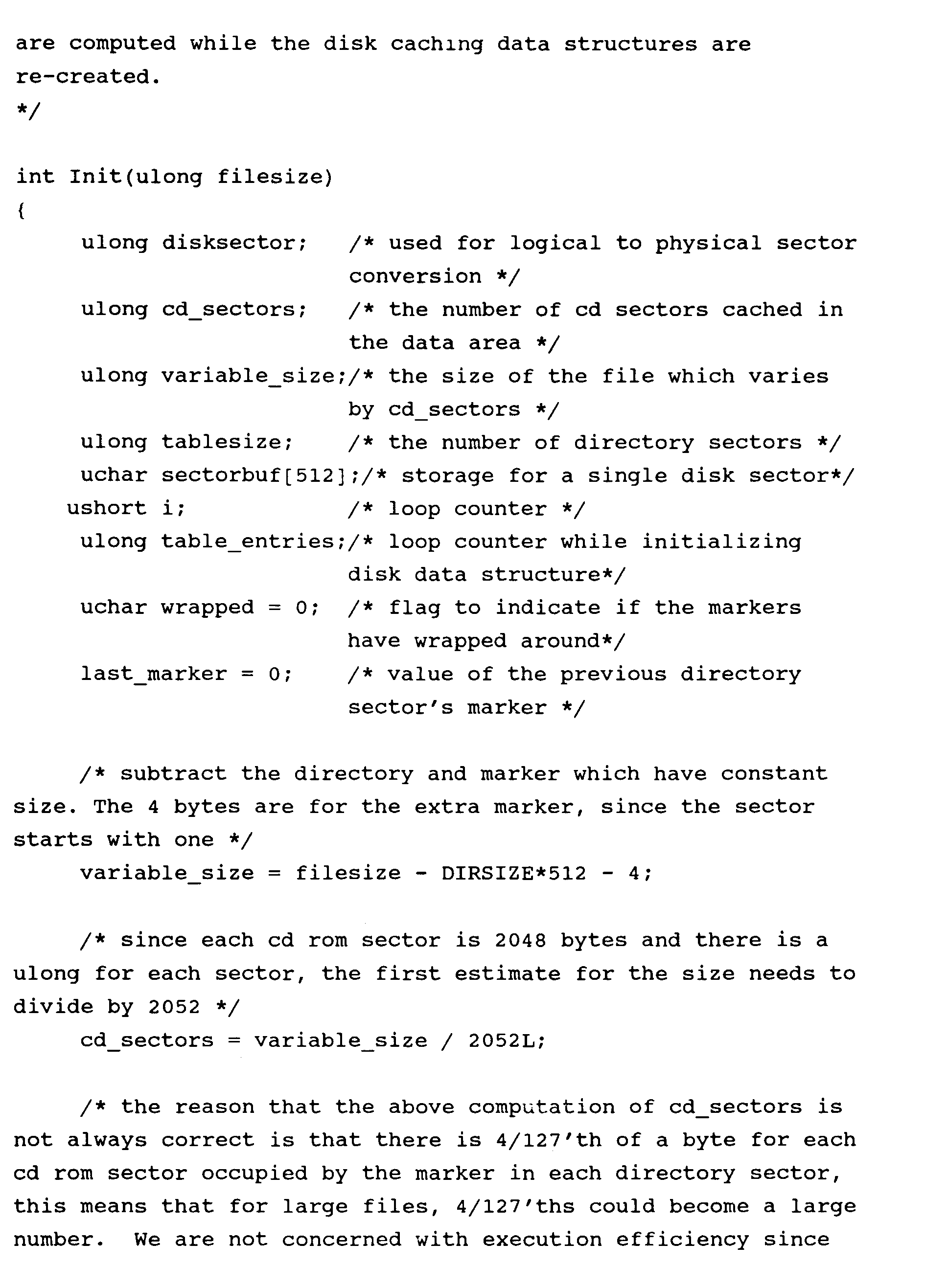

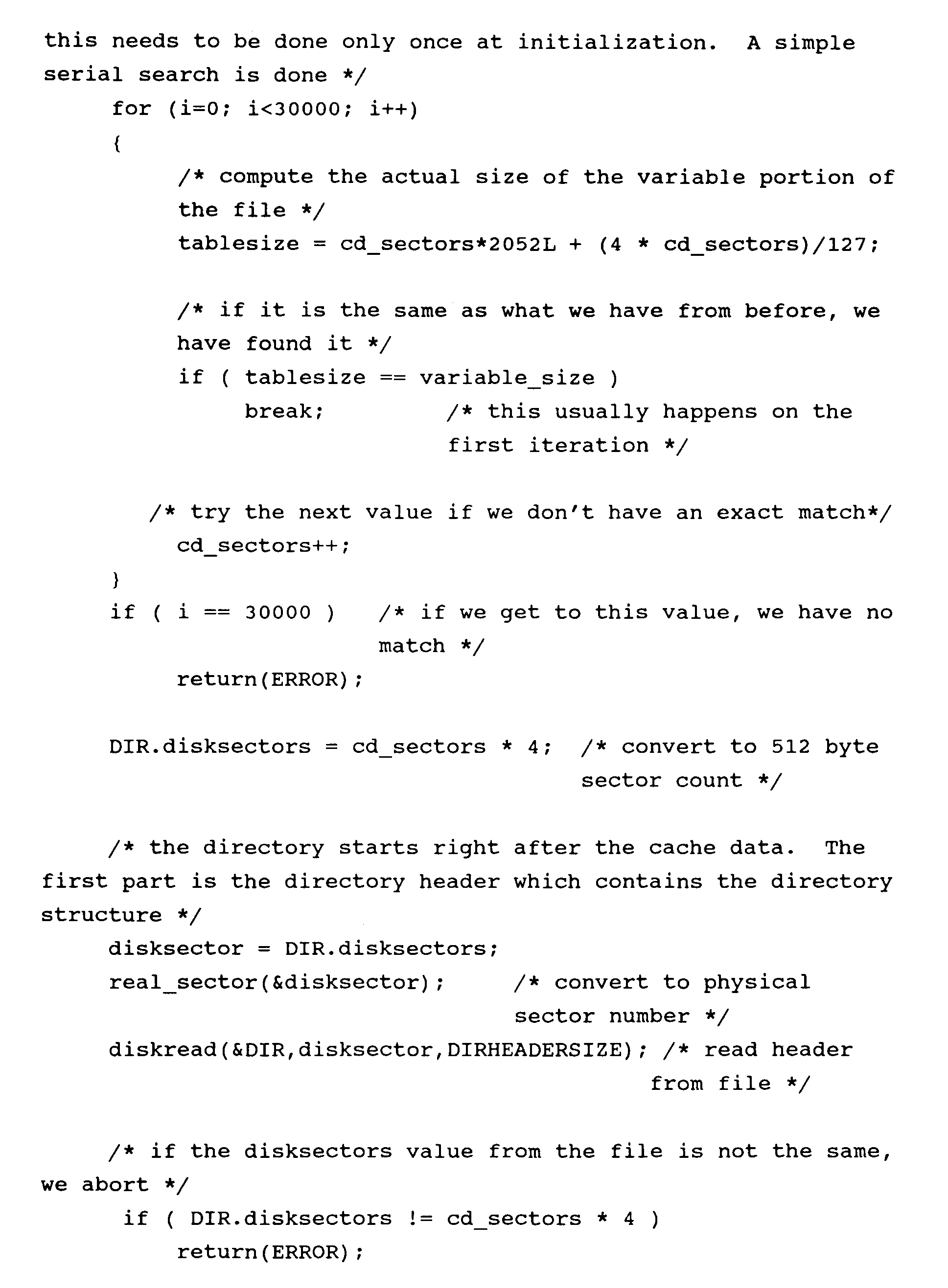

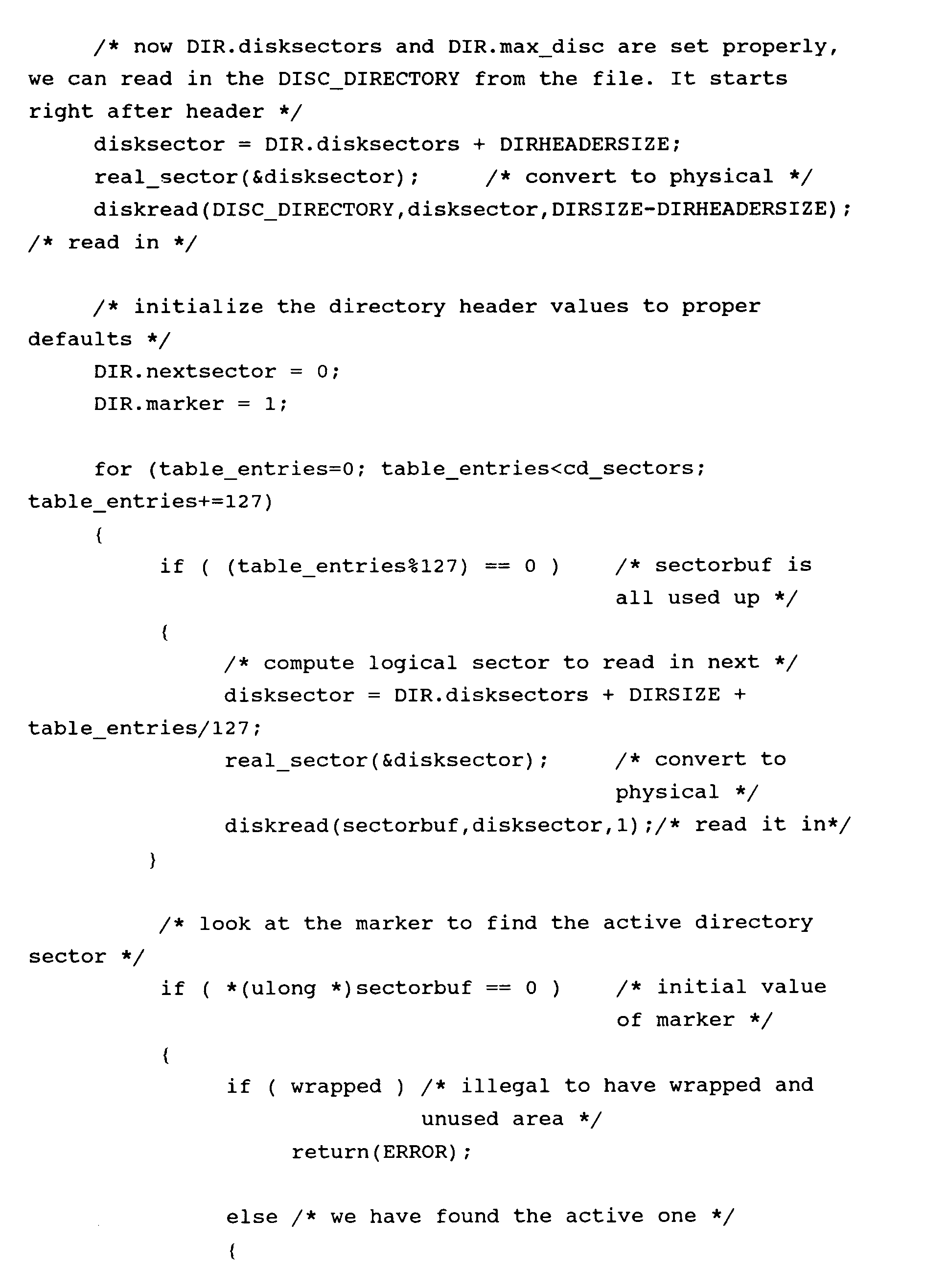

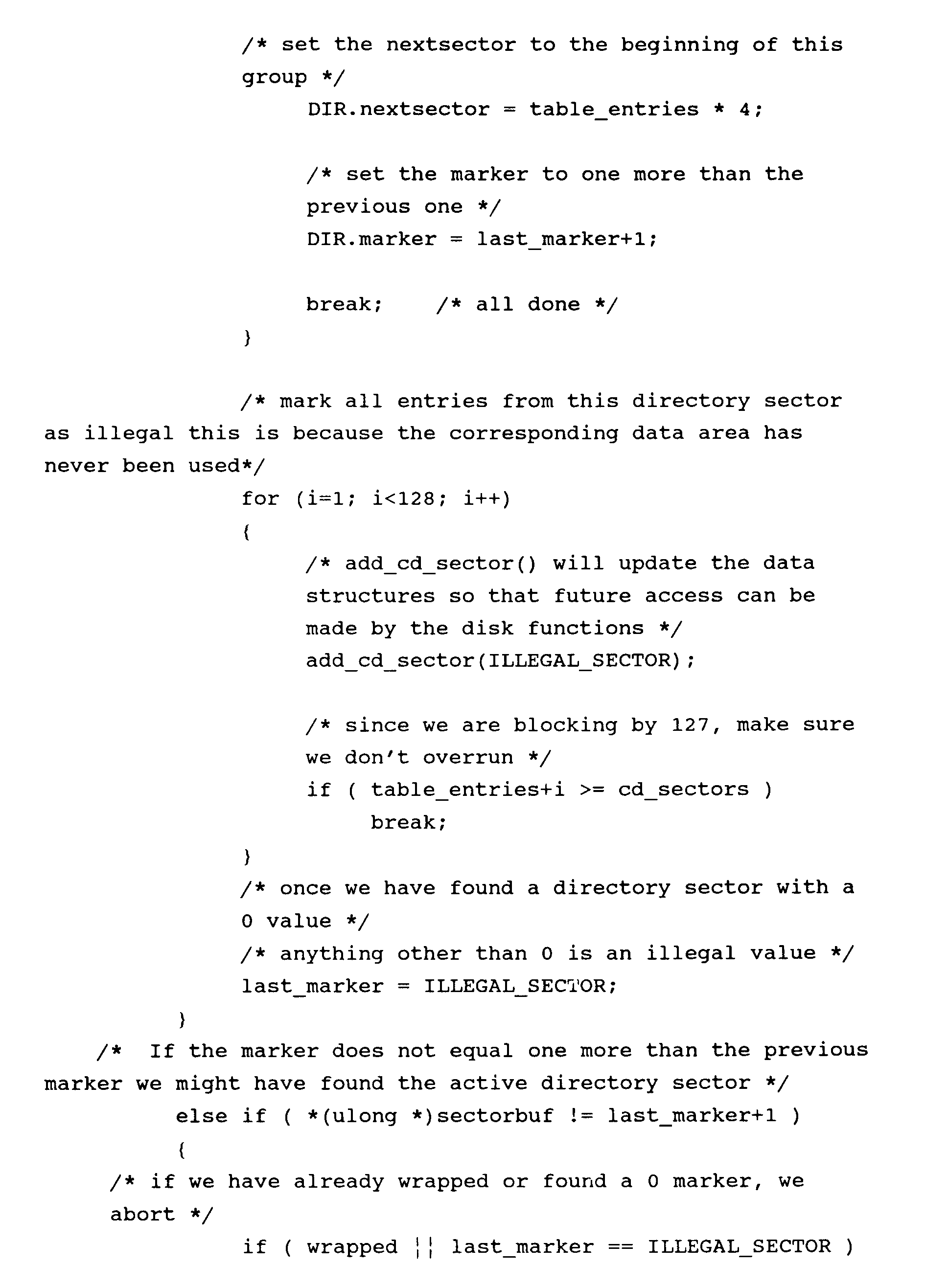

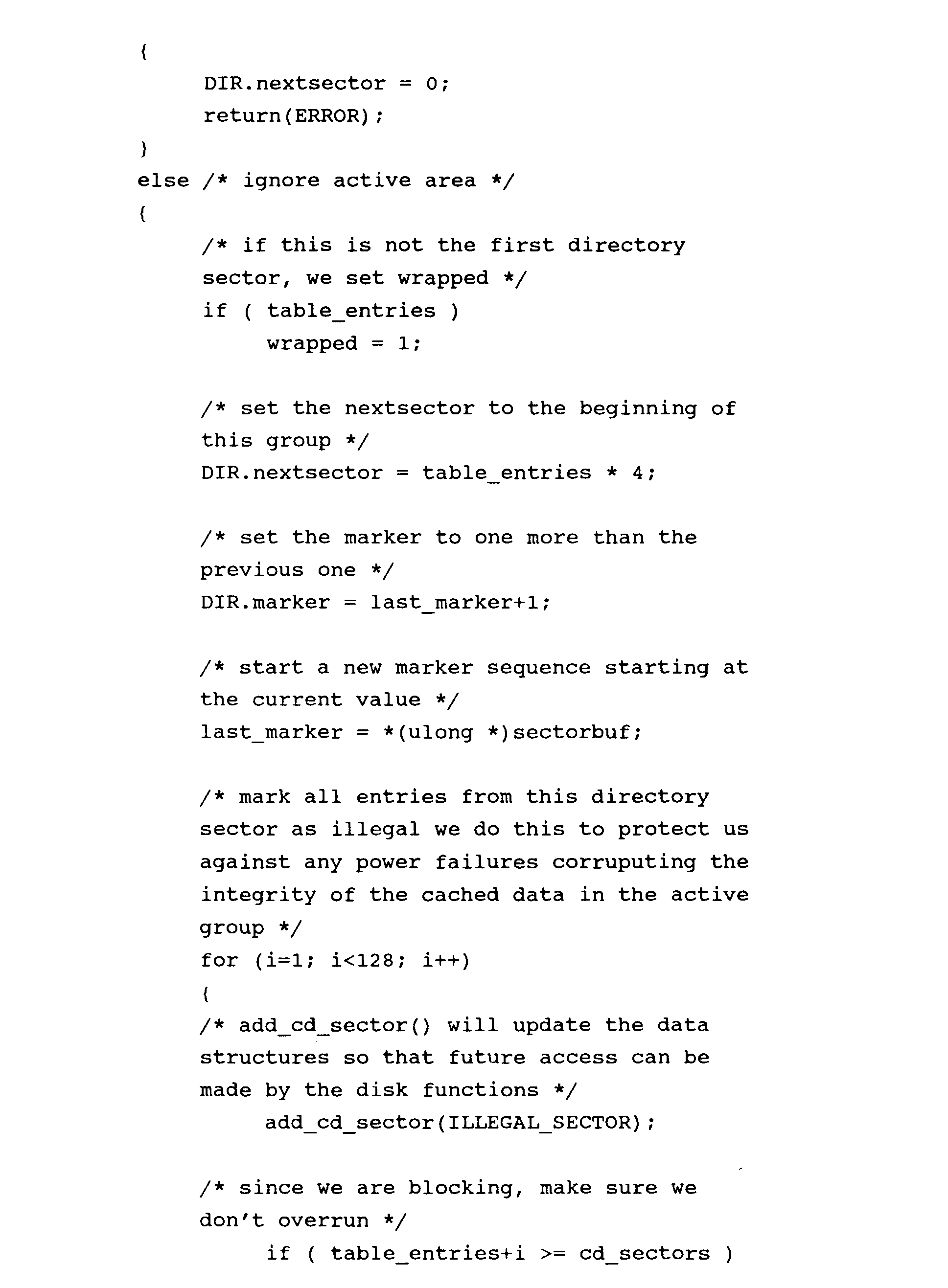

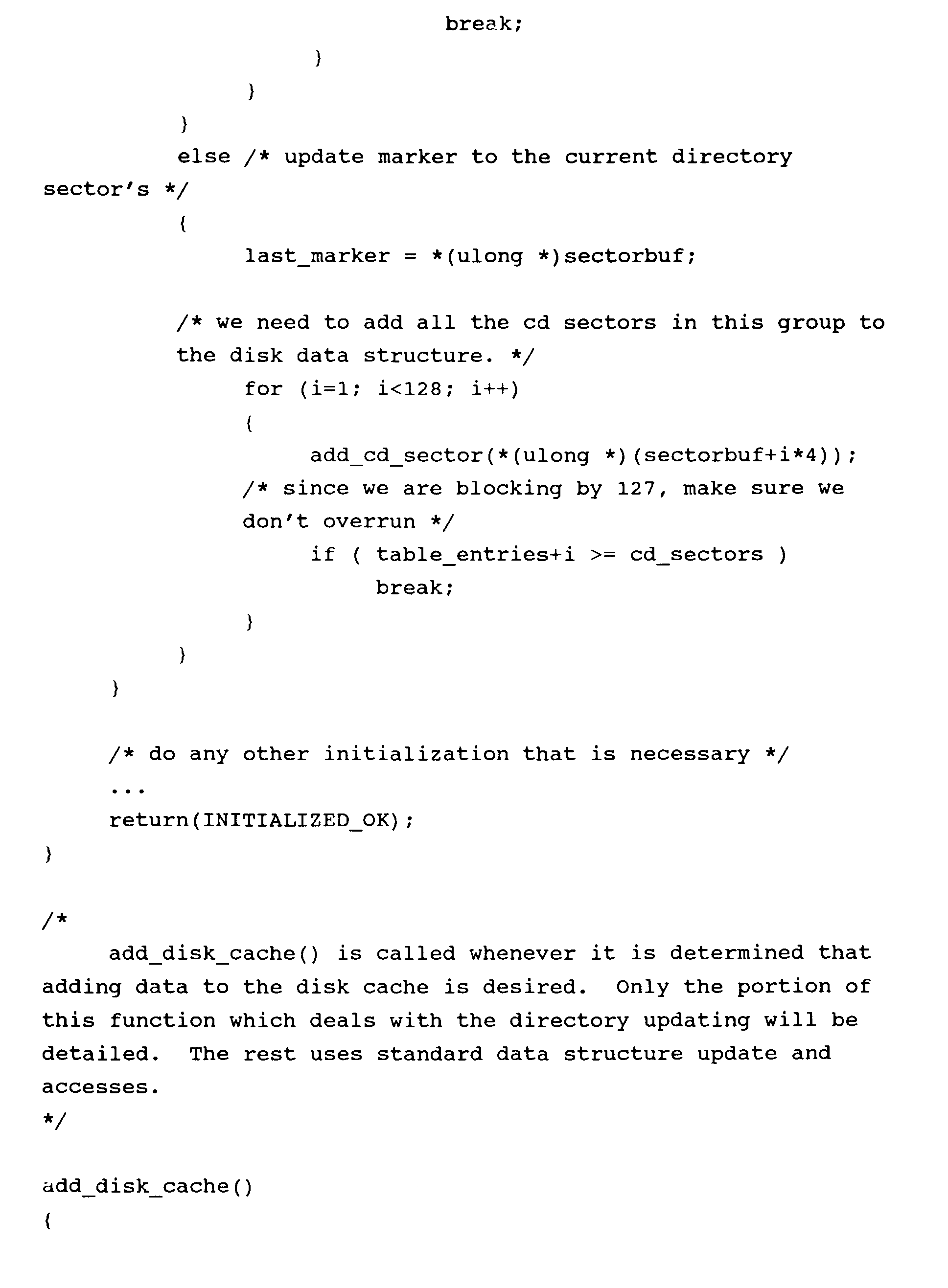

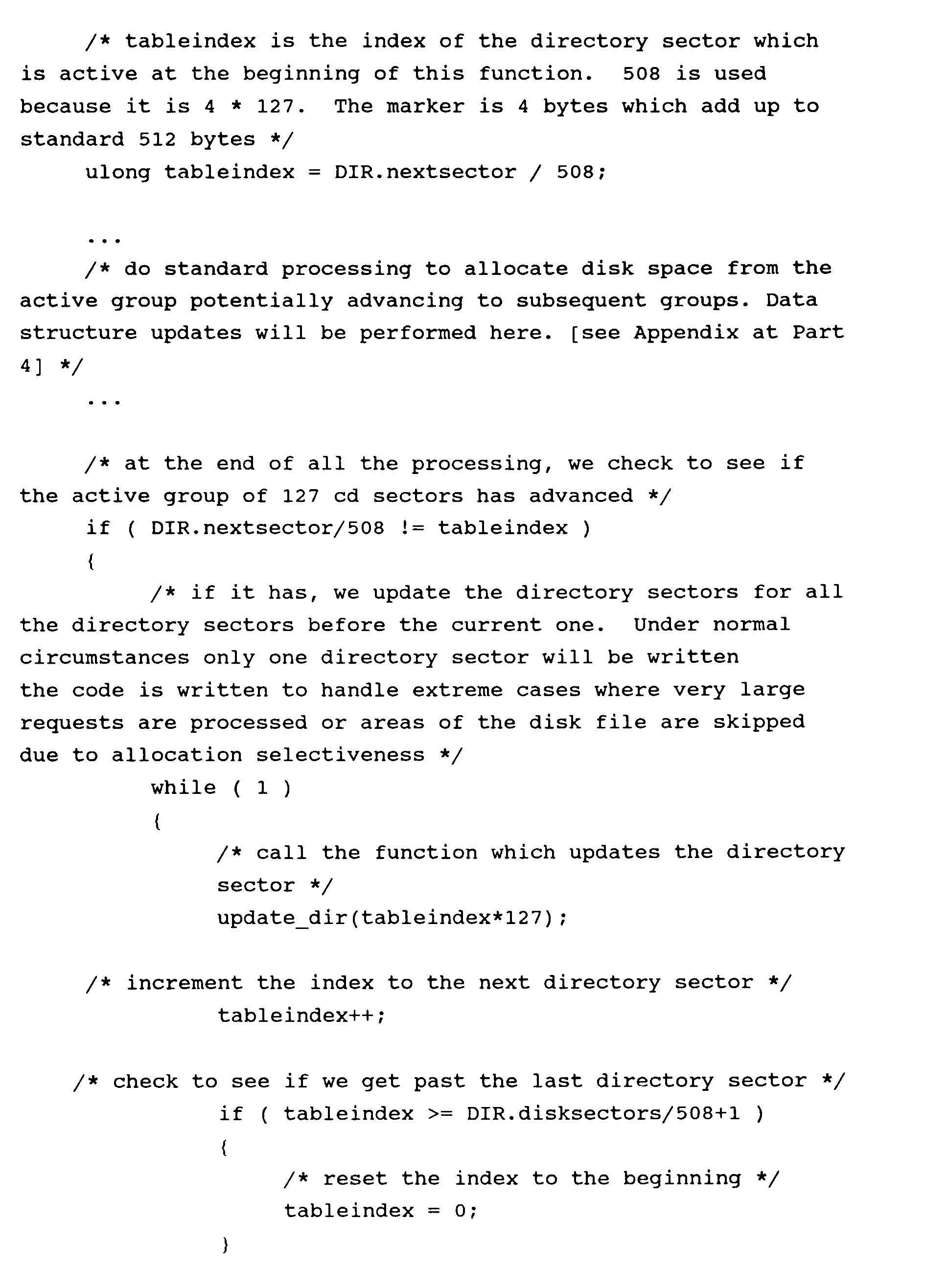

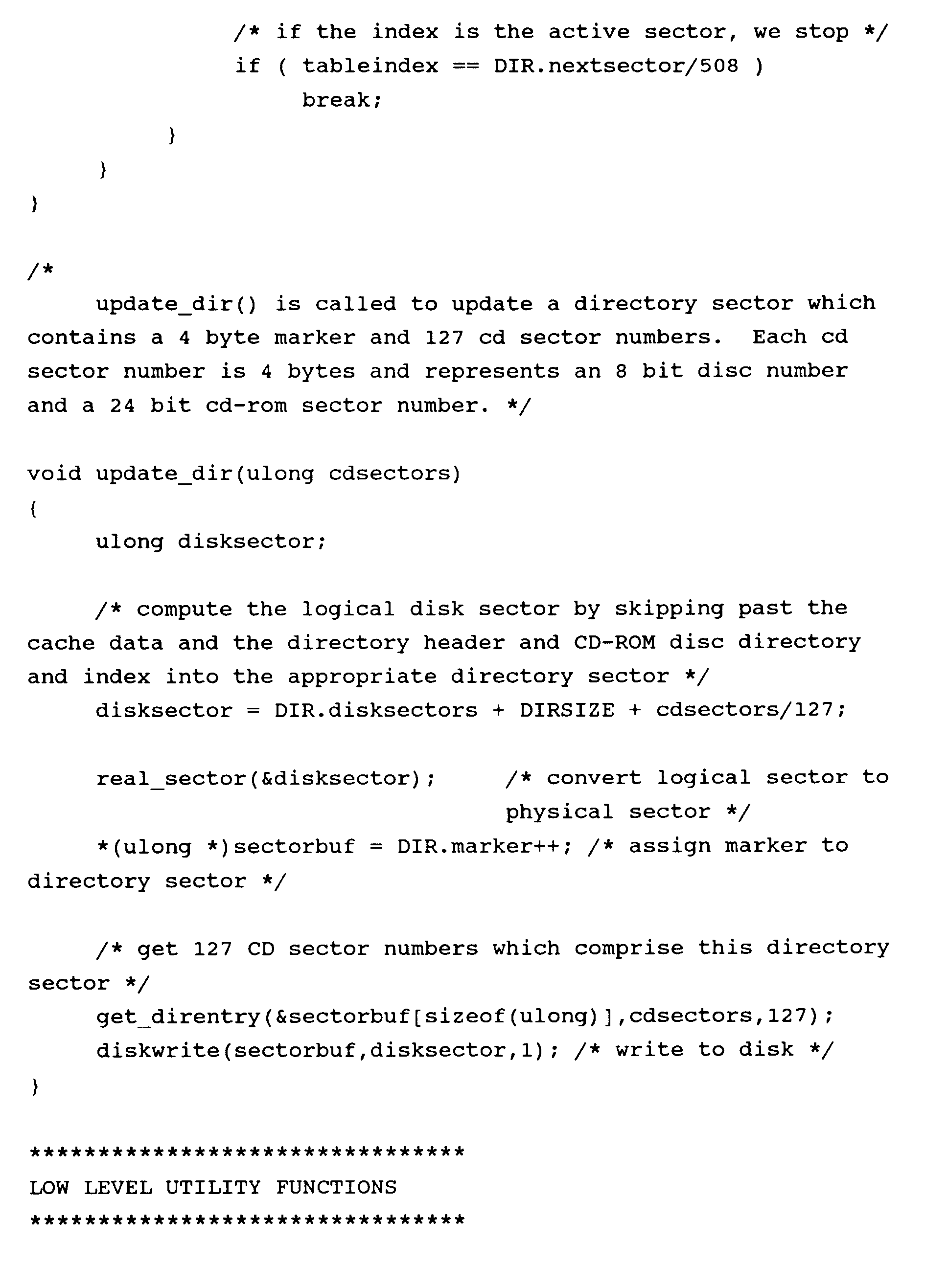

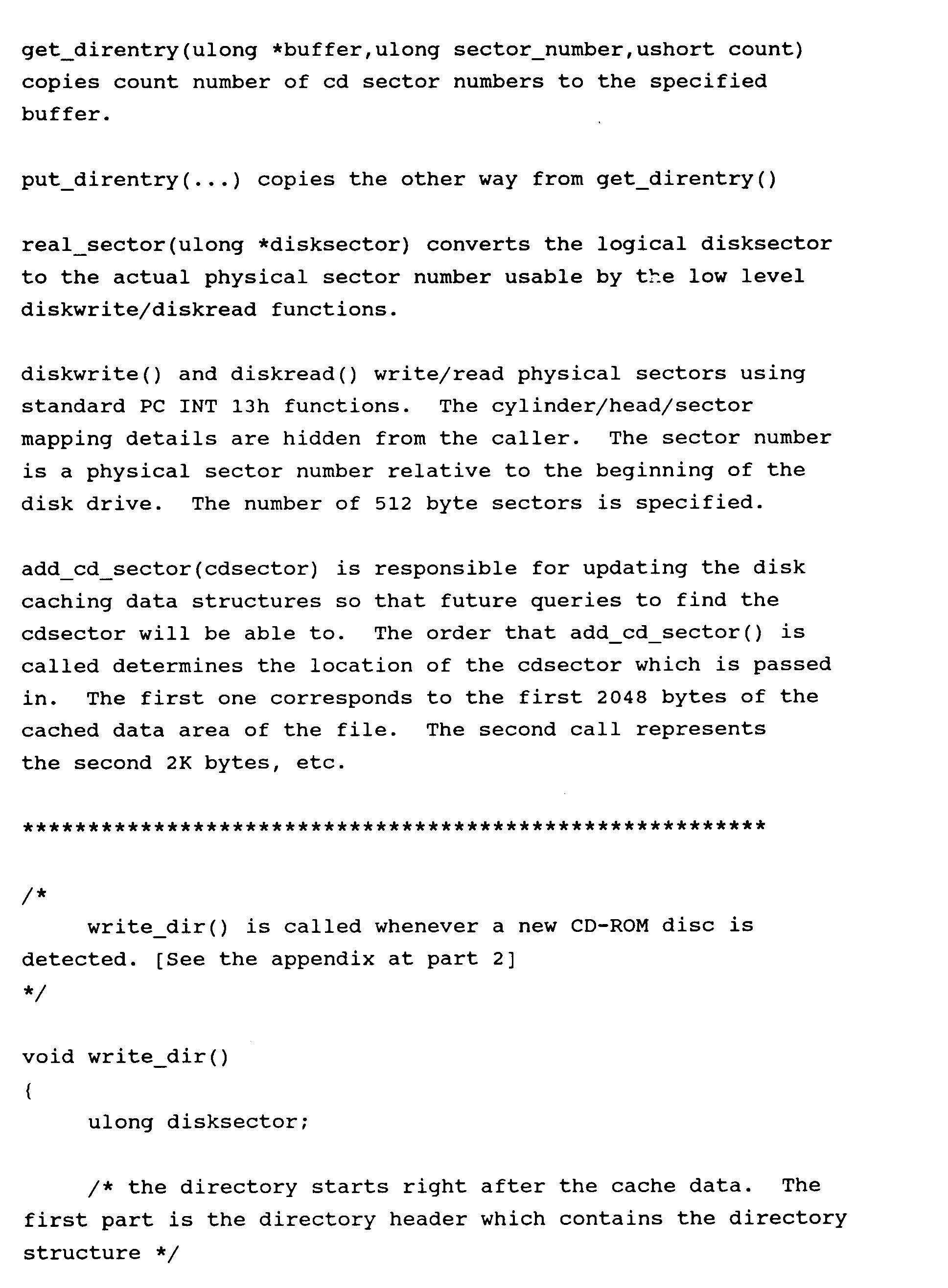

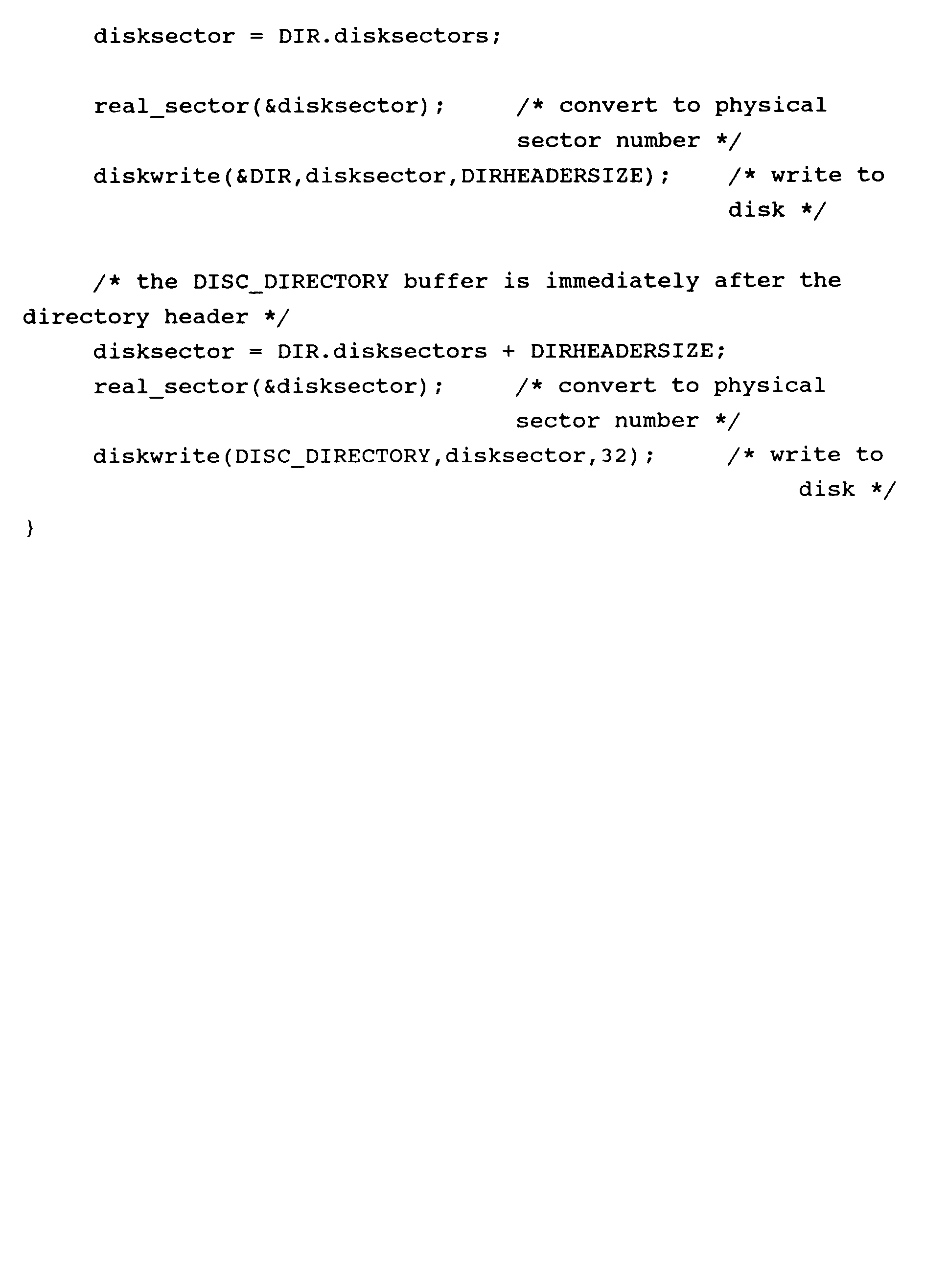

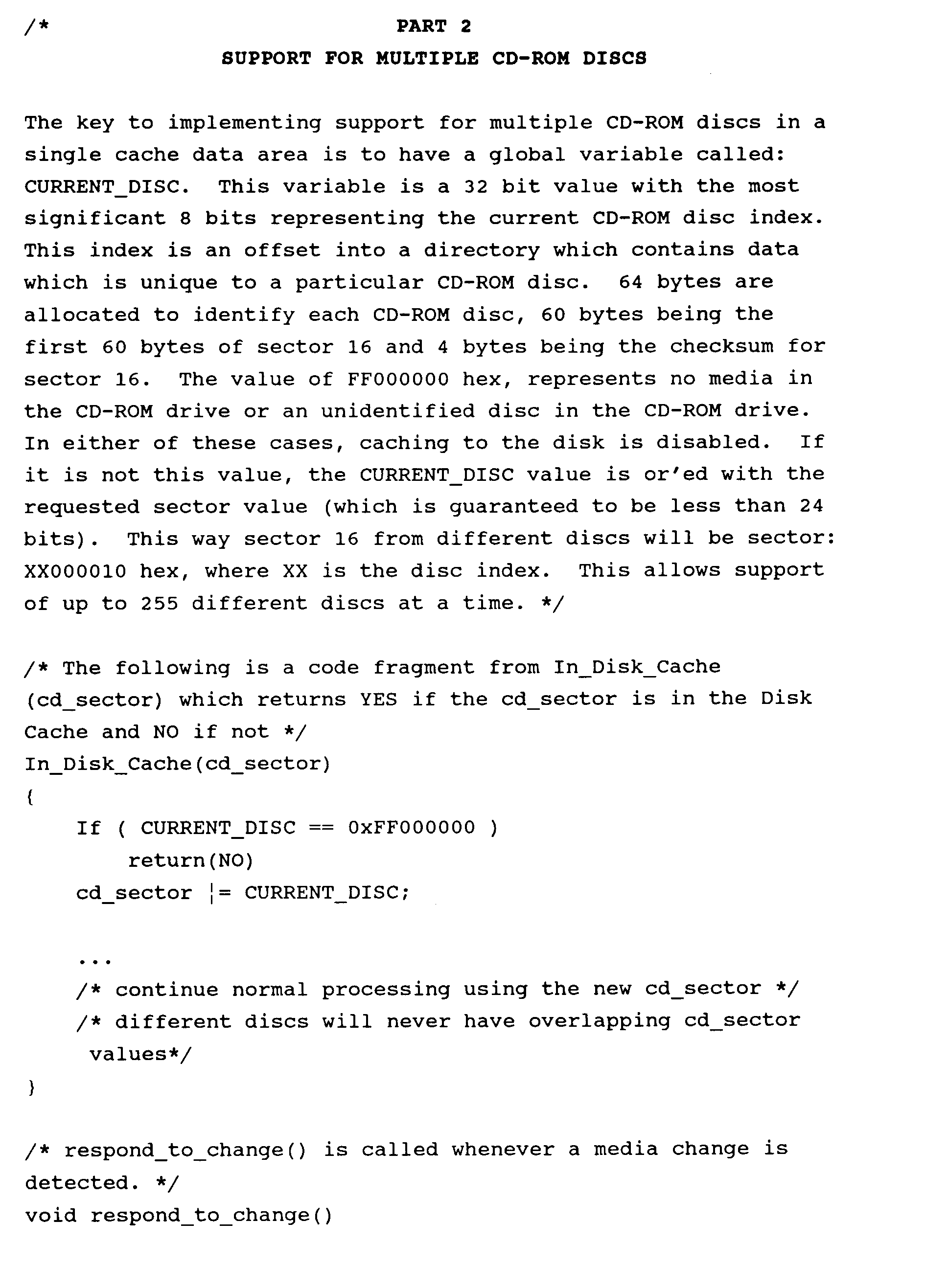

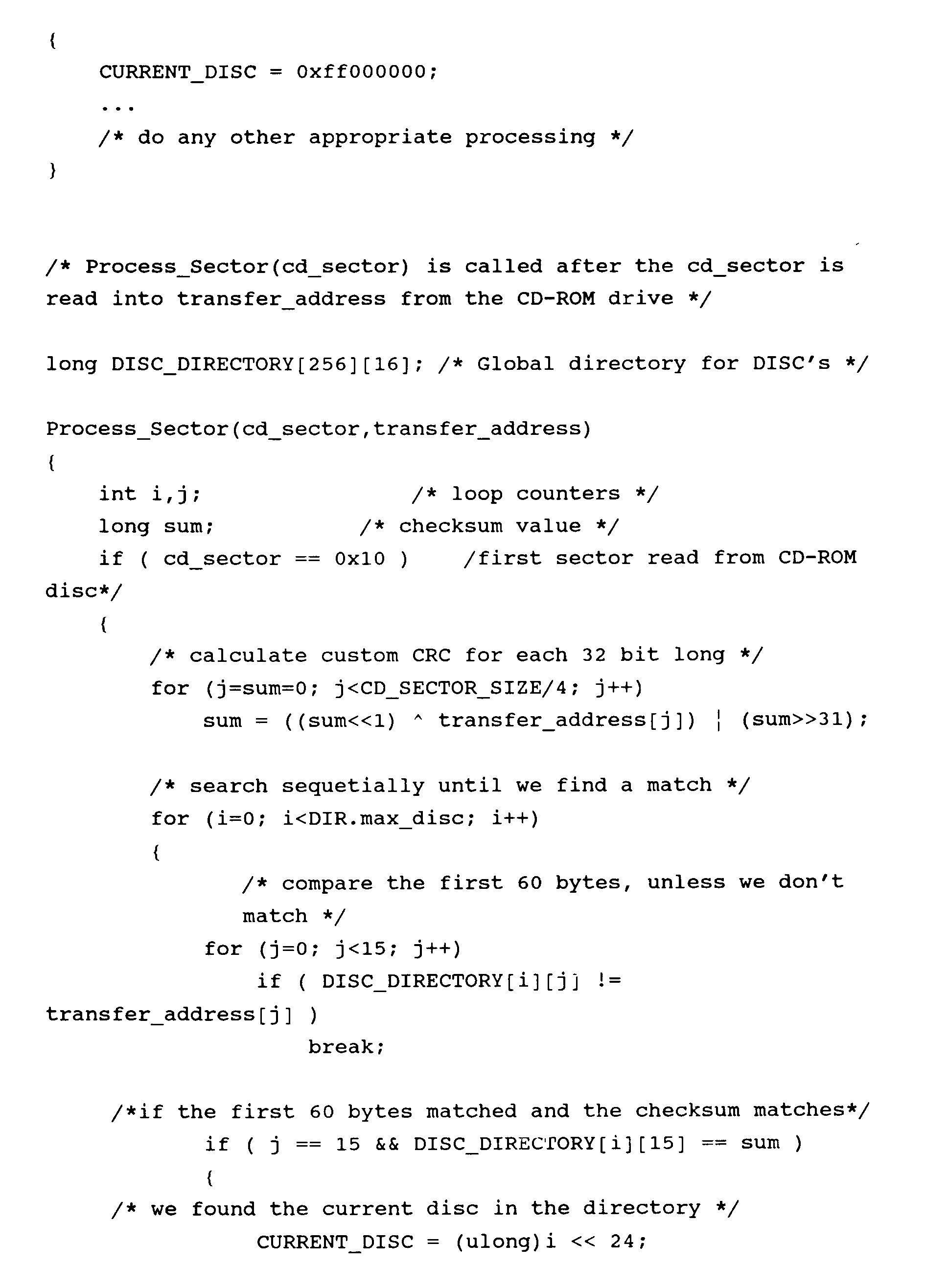

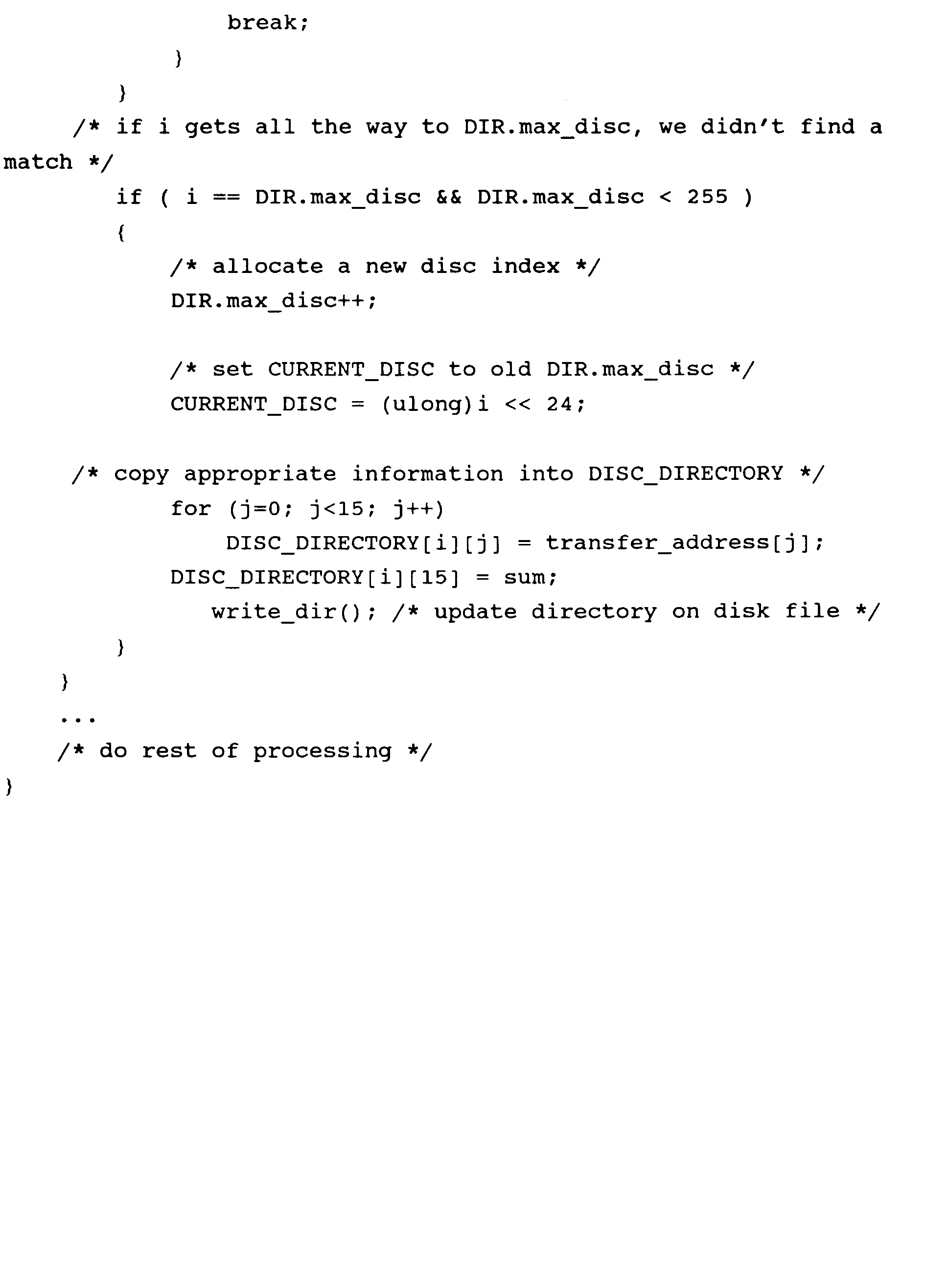

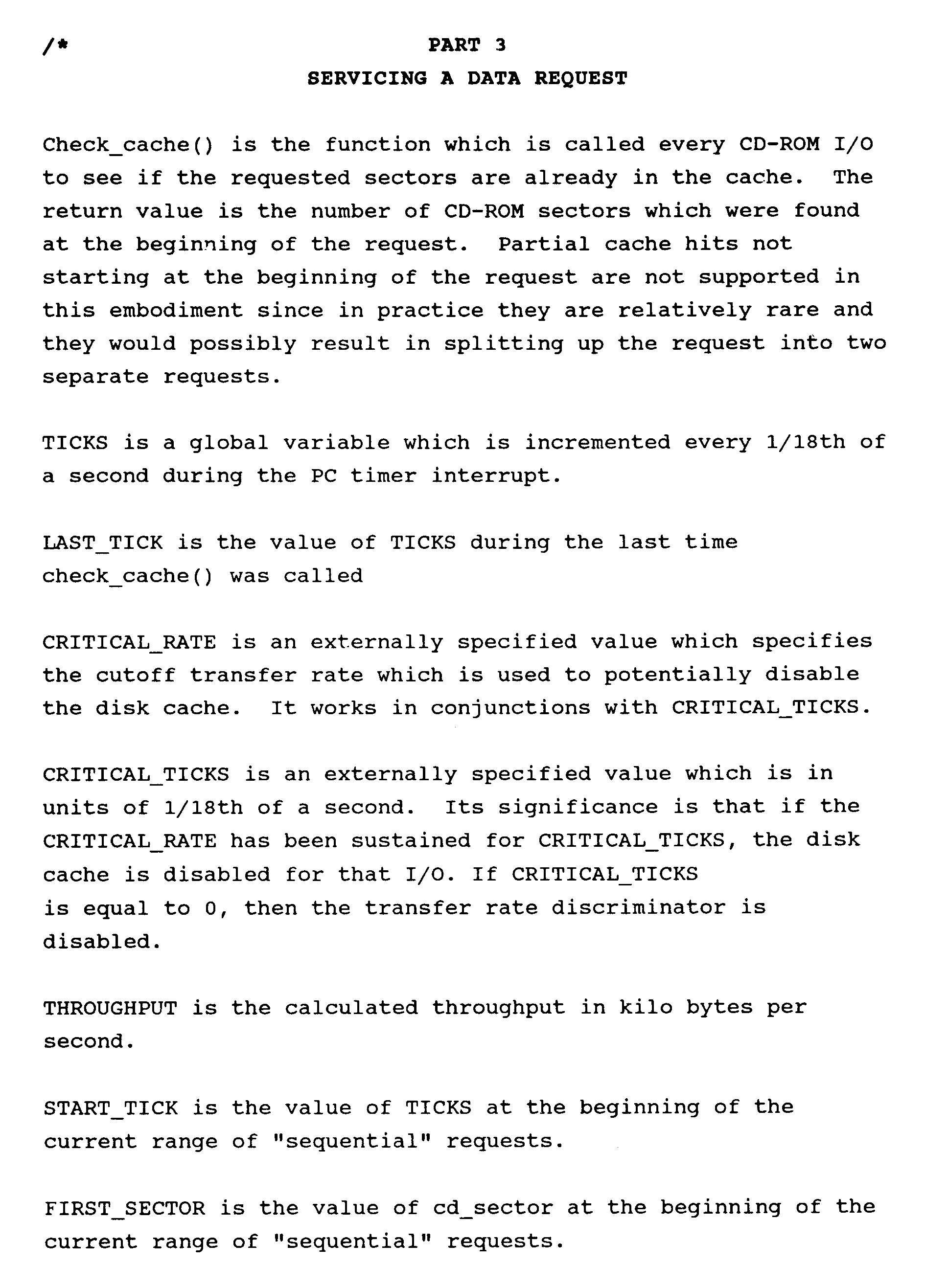

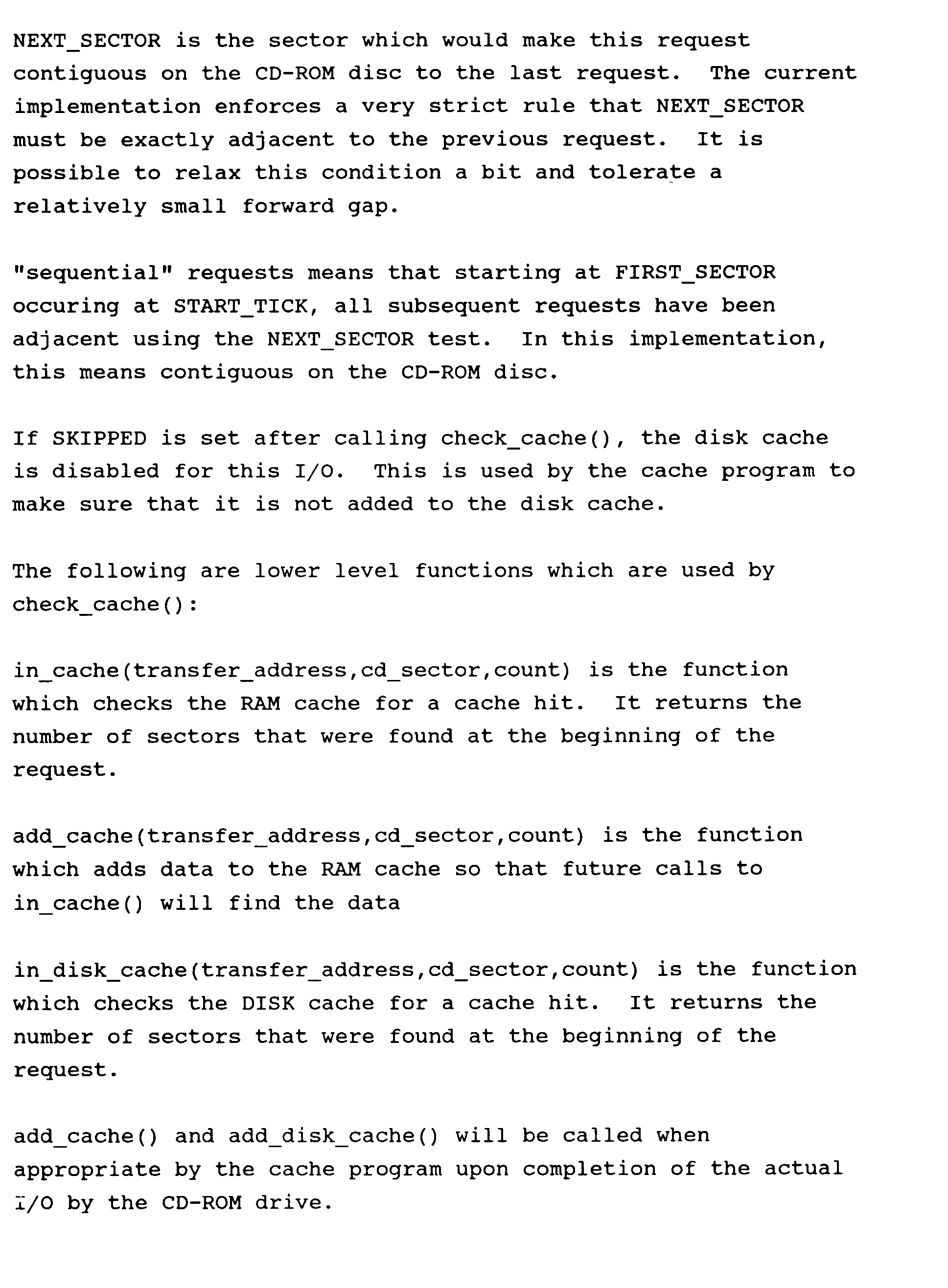

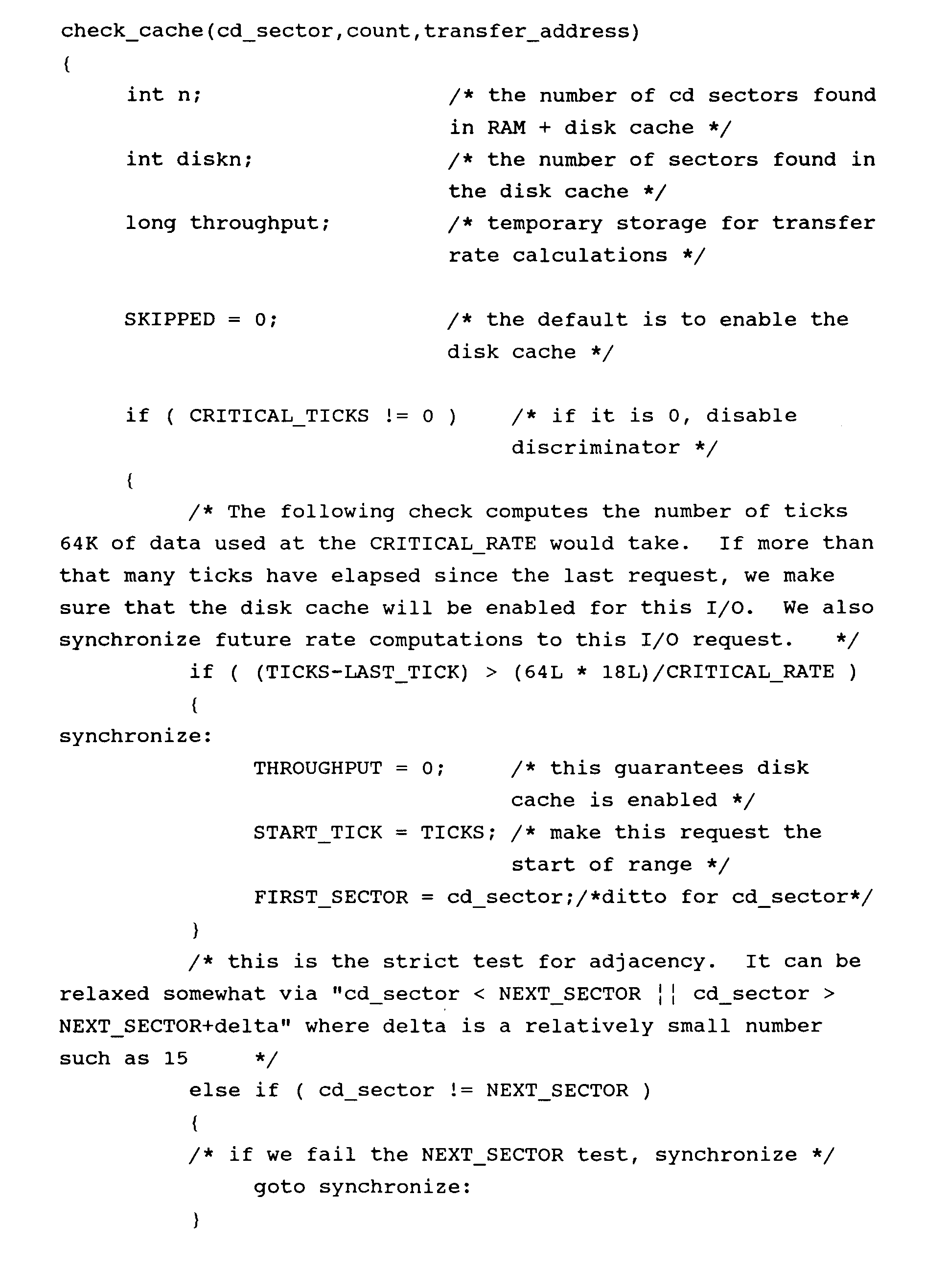

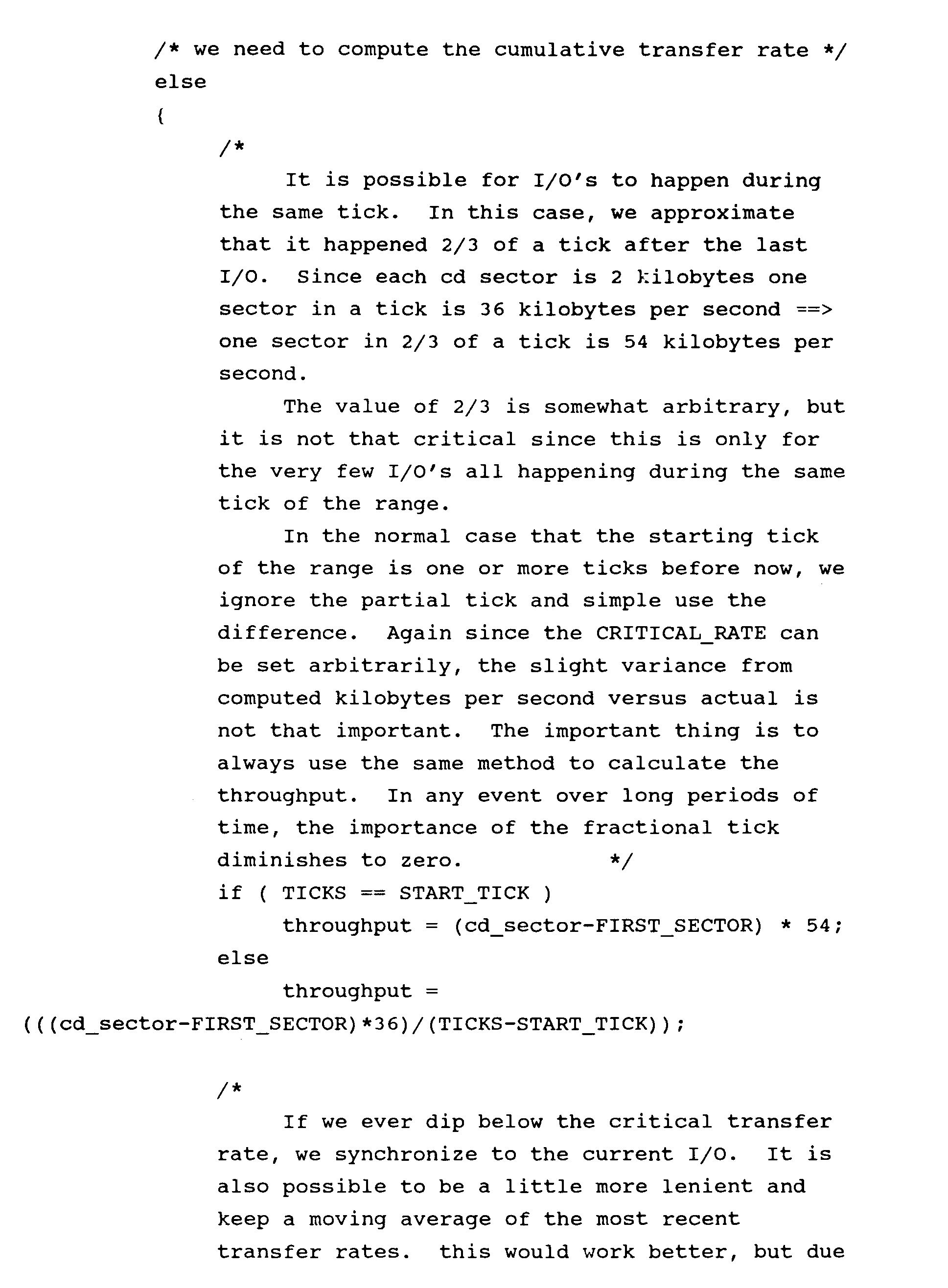

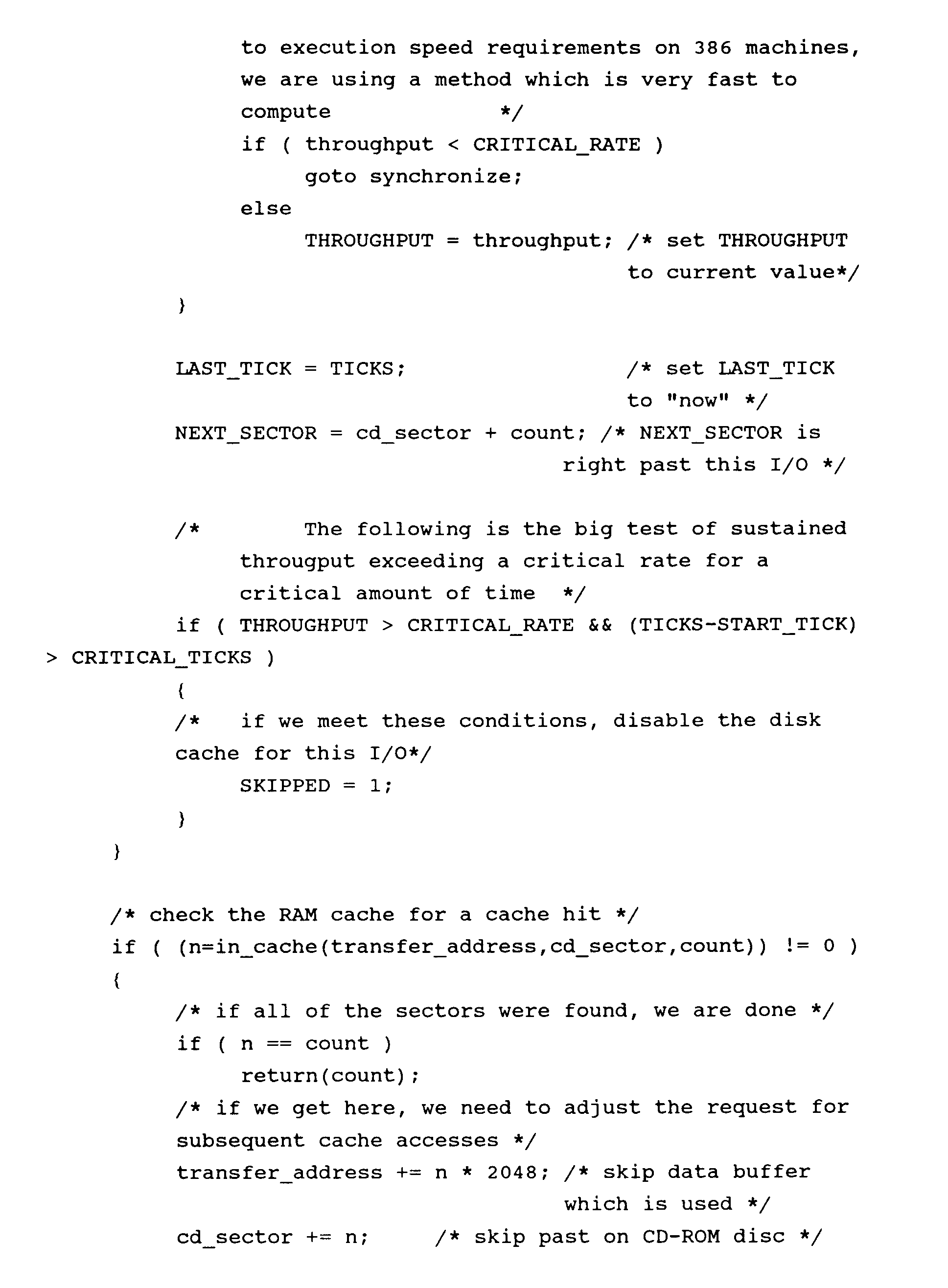

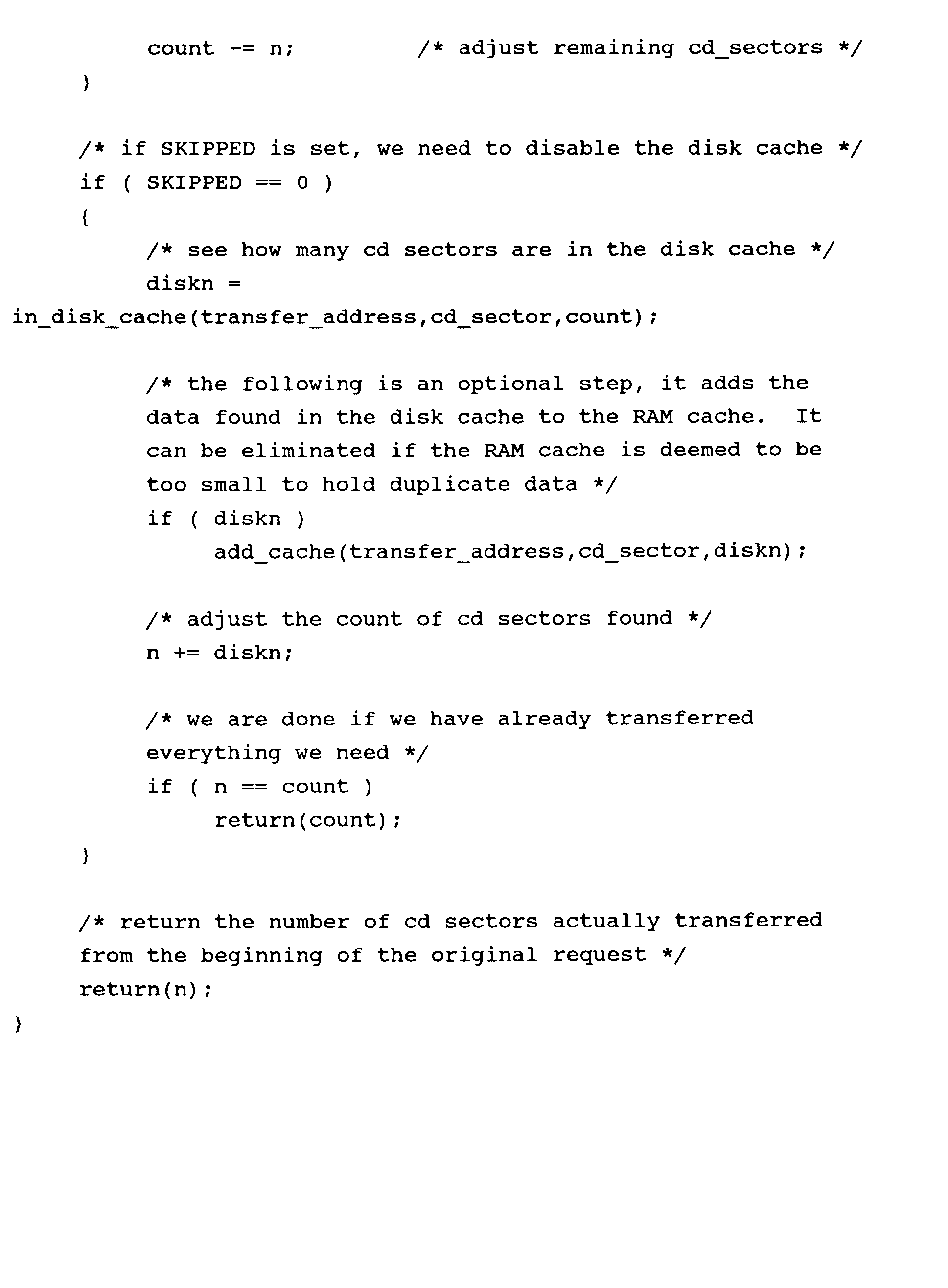

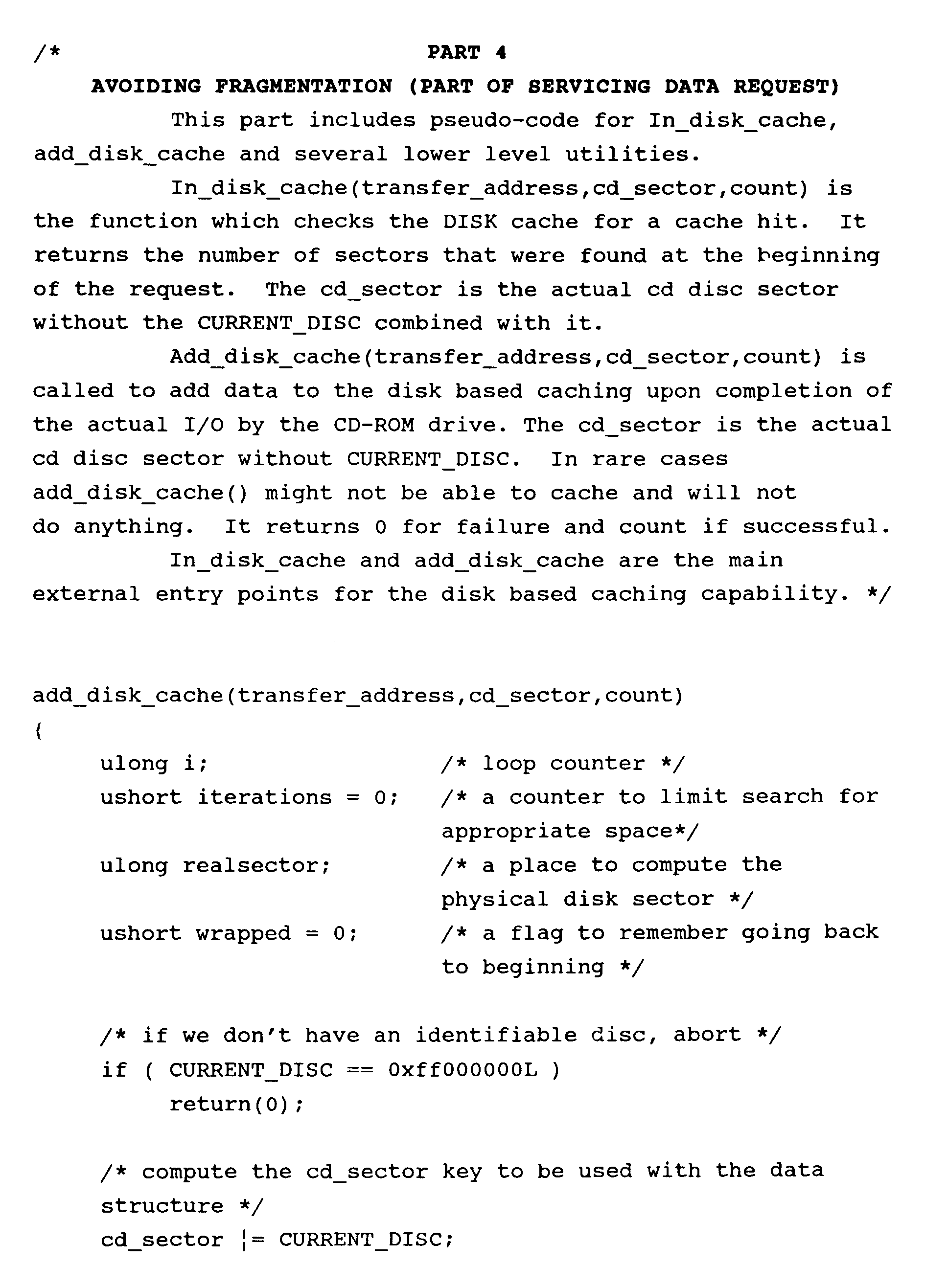

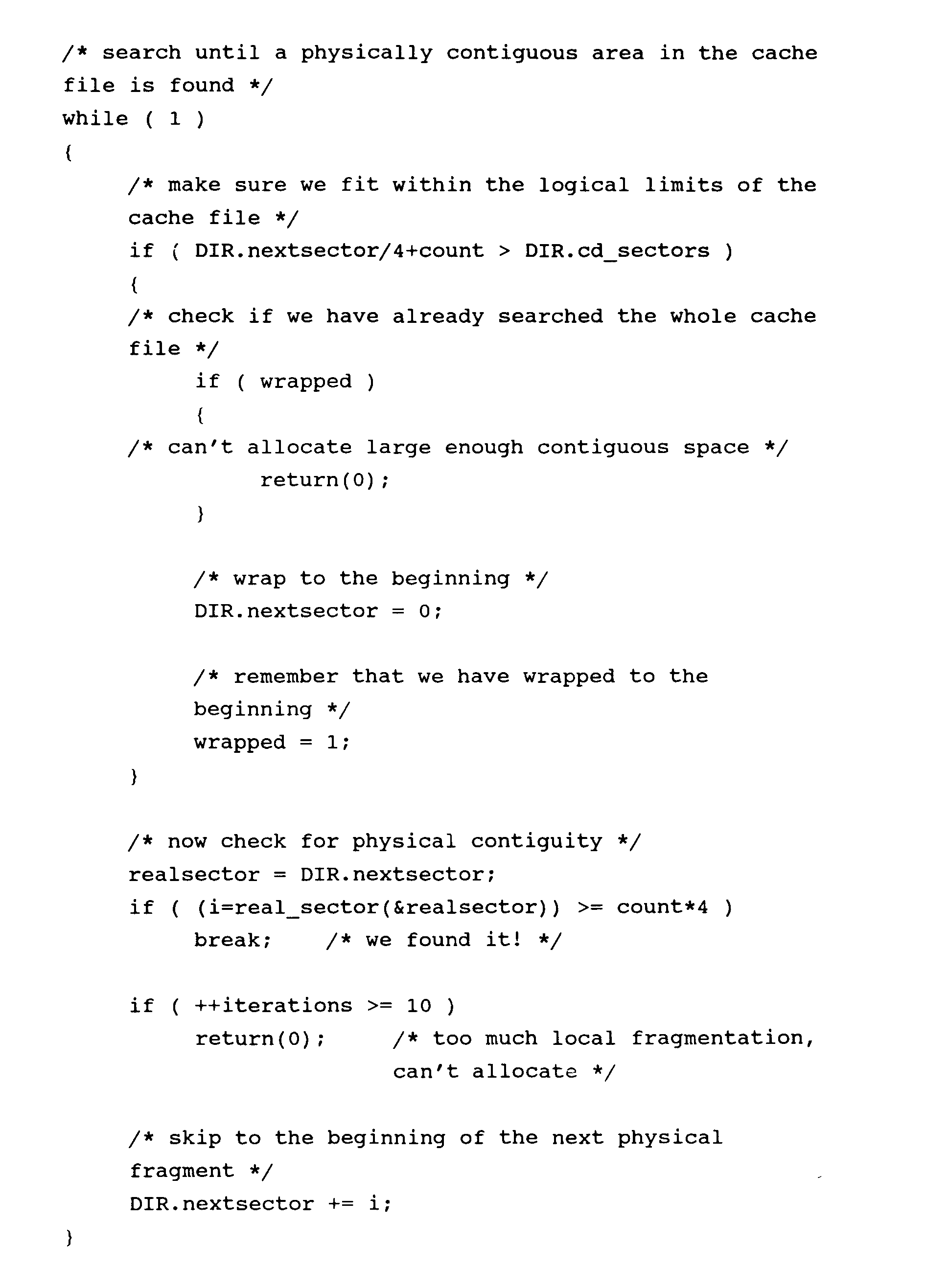

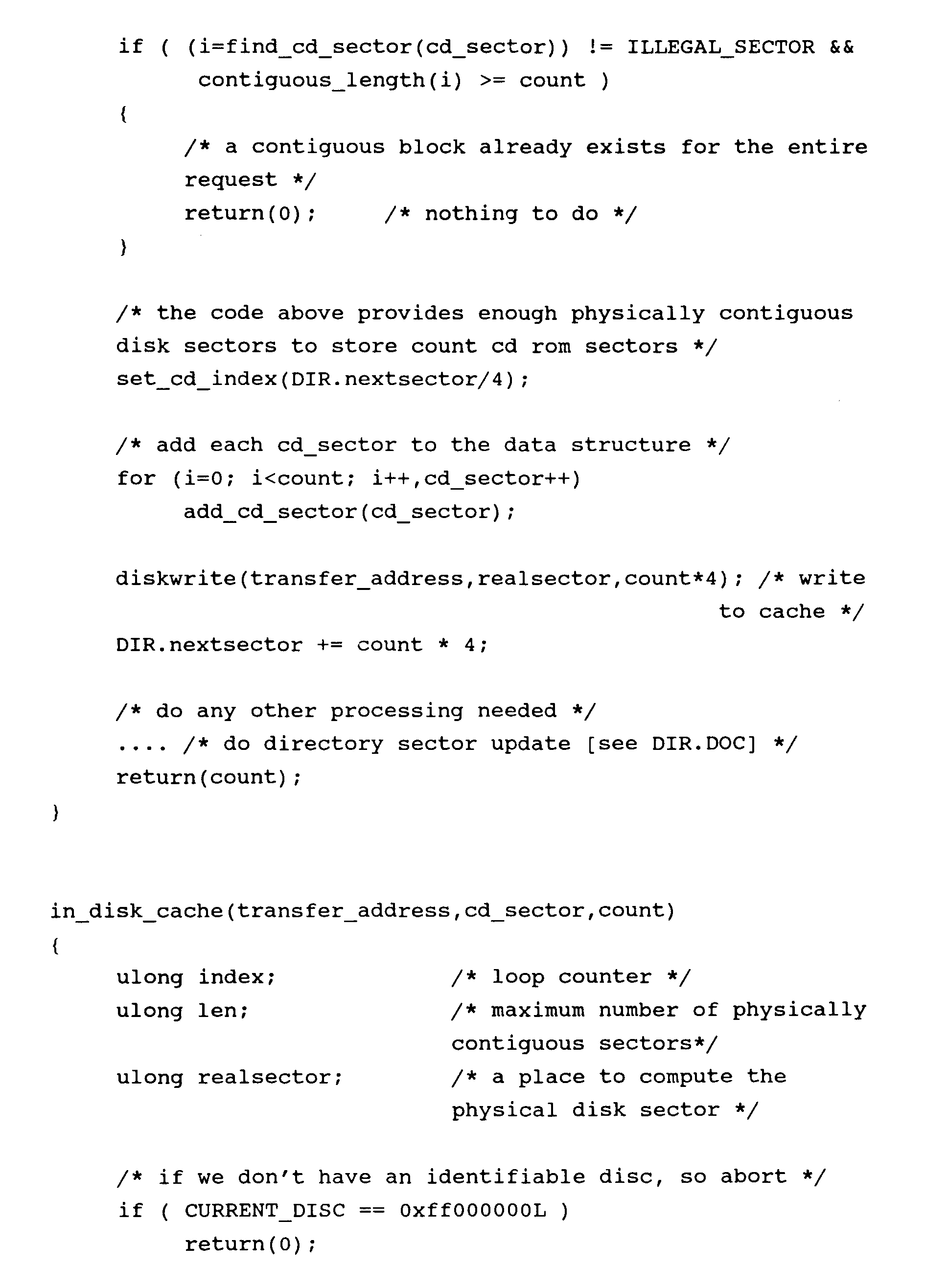

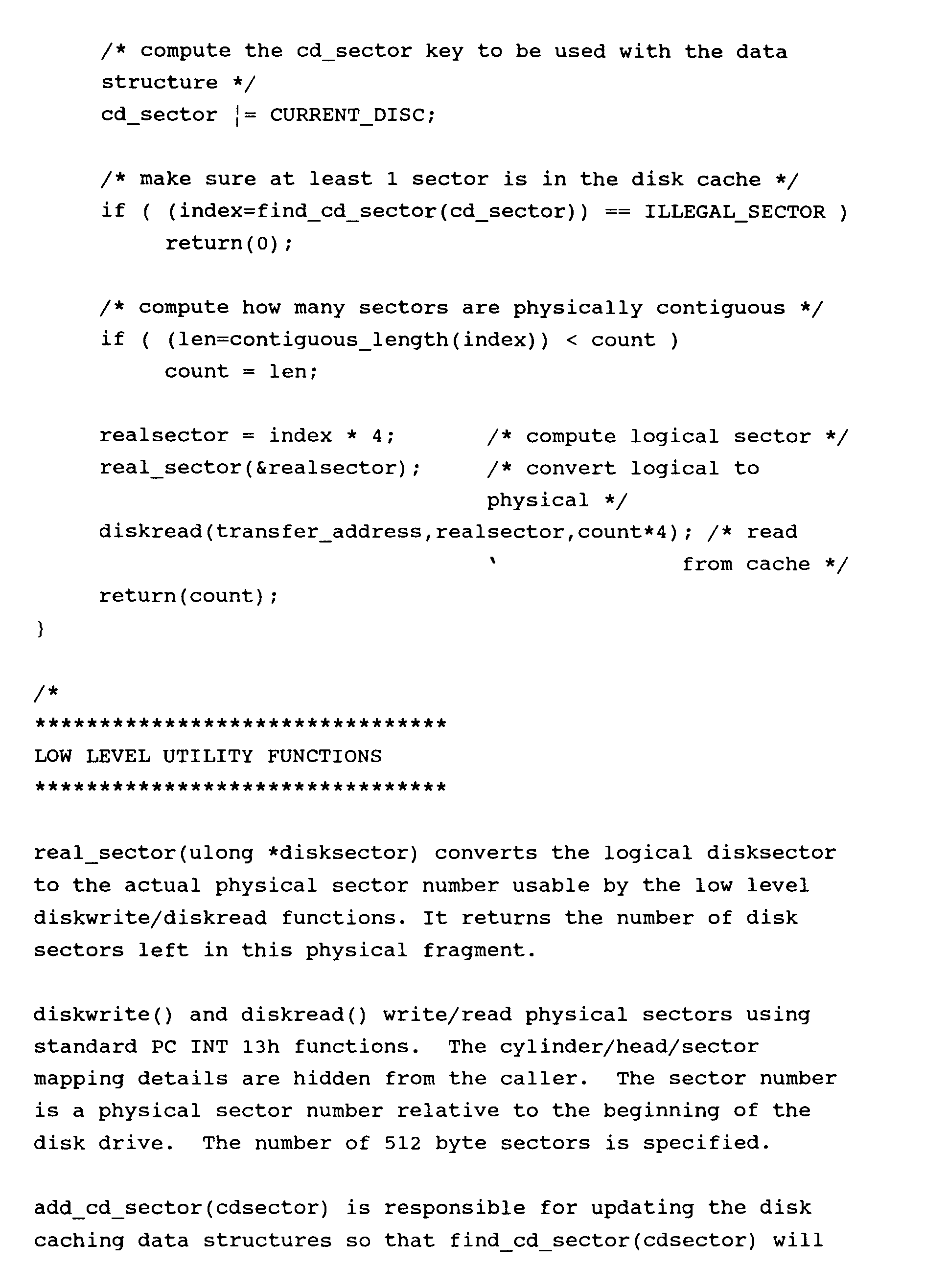

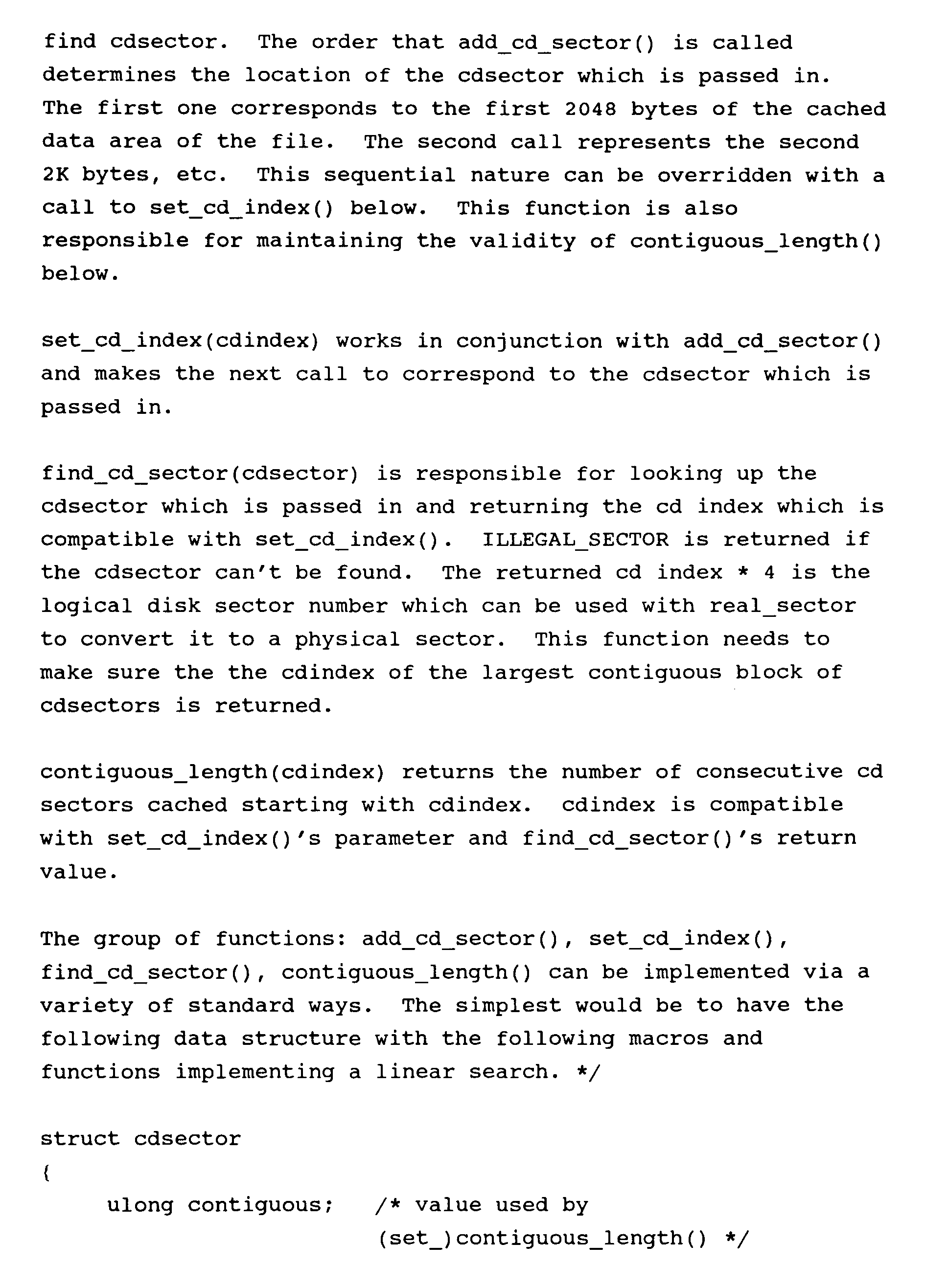

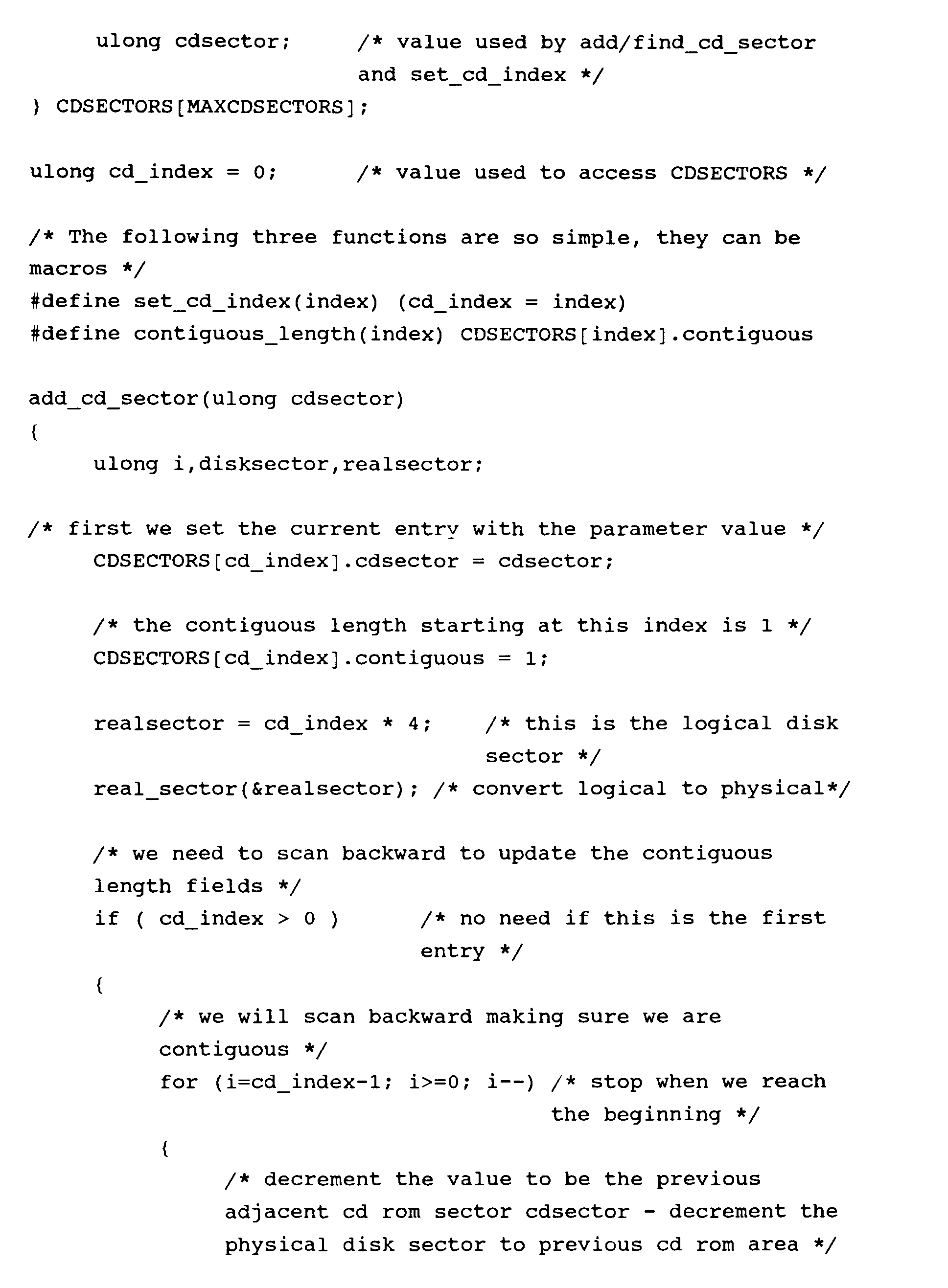

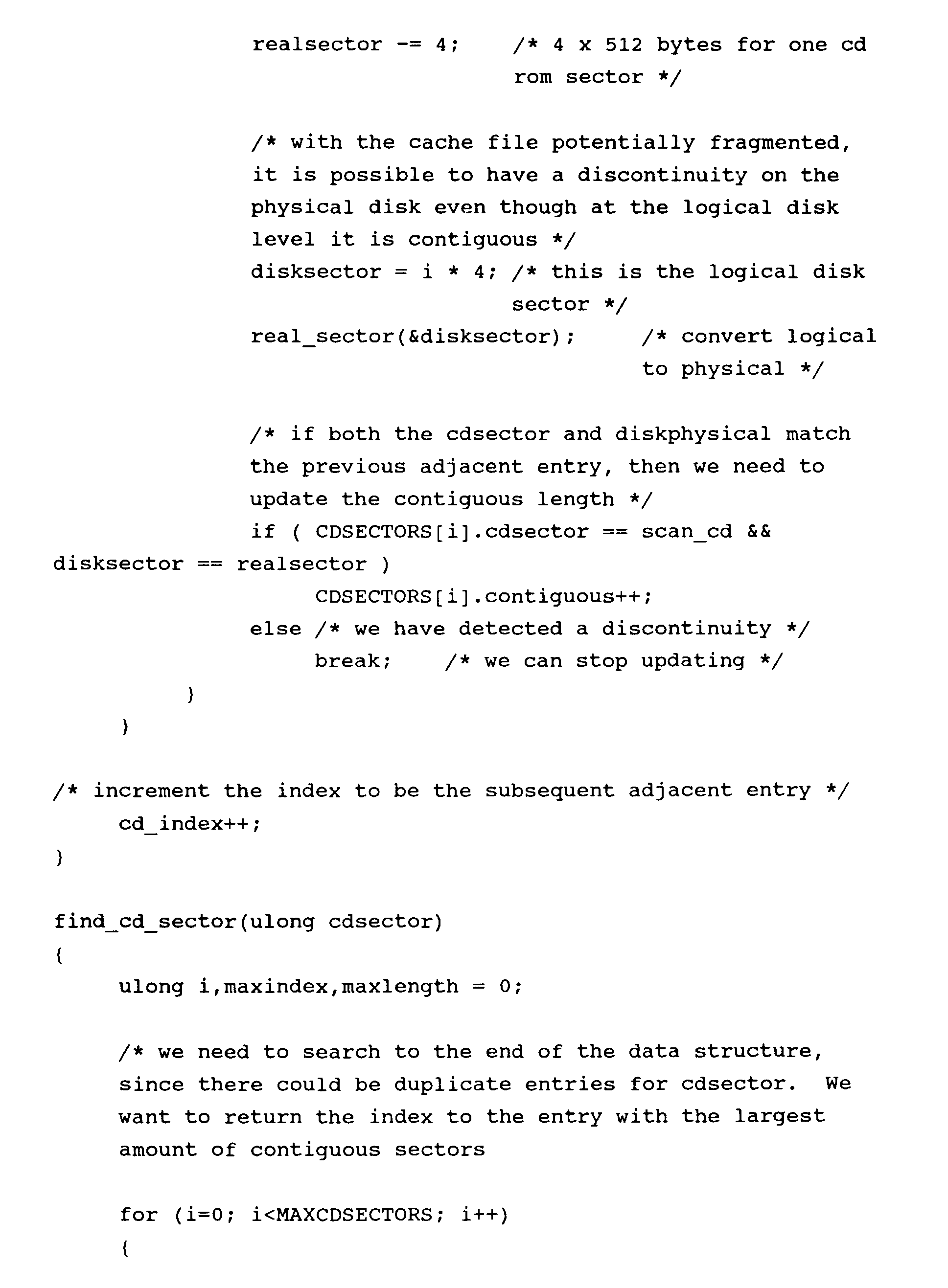

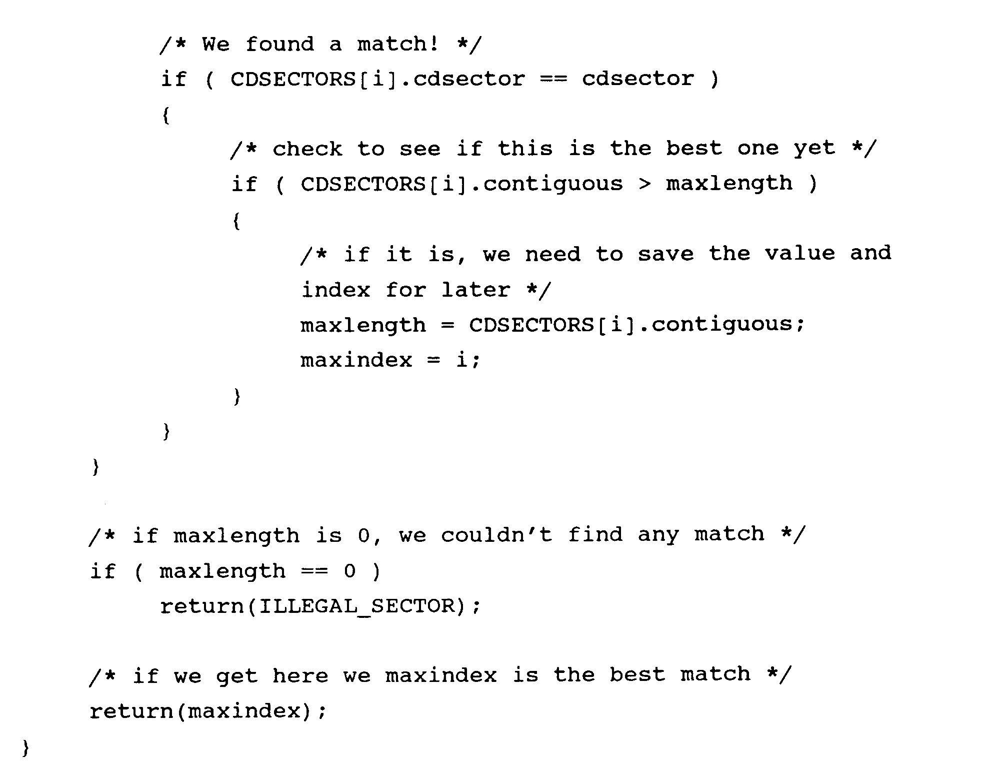

## Claims

1. A cache apparatus for storing data for a plurality of optical disks (70) accessible to enable either one or both of faster access time or faster transfer rate, comprising:
(a) a two-level cache (100), comprising a primary cache (102) for storing data for a current optical disk and a secondary cache (104) for storing data for a plurality of optical disks, the secondary cache comprising a first portion of a hard disk drive (60); and
(b) digital processing means (20) for executing a computer program which processes a current optical disk data request;
the processing means defining data structures in the two-level cache (100), comprising:
(i) a first data structure (184) for storing a plurality of respective optical disk identification codes;
(ii) an index (182) pointing into said first data structure to identify a current optical disk;
(iii) an optical disk sector address (186) for data specified in a current data request associated with said current optical disk; and
(iv) a second data structure (190) for mapping data-request data in said two-level cache (100) to a location on an associated optical disk;
the processing means (20) processing an optical disk data request by comprising the steps of:
(i) maintaining the index to identify the current optical disk (70);
(ii) determining the optical disk sector address (186) from the current data request;
(iii) storing data-request data for the current data request in said two-level cache (100) when not in said two-level cache; and
(iv) updating said second data structure (190) to enable the stored data-request data to be later accessed directly from said two-level cache.

2. The cache apparatus of claim 1, in which the step of maintaining the index comprises the steps of:
identifying removal of a first optical disk from the optical disk drive;
identifying insertion of a second optical disk into the optical disk drive;
determining an identification code corresponding to said second optical disk;
checking the first data structure (184) to determine whether said identification code is already present;
when already present,then setting the index (182) to refer to said already present identification code; and
when not already present, adding said identification code to said first data structure (184) and setting the index (182) to refer to said added identification code.

3. The cache apparatus of claim 1, in which valid data stored in said first portion for a first optical disk remains valid and accessible following a change of optical disks from a second optical disk back to the first optical disk.

4. The cache apparatus of claim 1, in which data stored in said first portion for a first optical disk remains valid and accessible once power is restored after either one of a power failure or power shutdown.

5. The cache apparatus of claim 1, in which the computer program step of storing comprises the step of selecting locations in secondary cache to overwrite (218, 238) using first-in first-out criteria.

6. The cache apparatus of claim 1, in which the executed computer program further comprises the step of retrieving data from the two-level cache when all the data specified by the current data request is present in the two-level cache and the two-level cache is active.

7. The cache apparatus of claim 1, in which the executed computer program further comprises the step of retrieving data from the two-level cache when any of the data specified by the current data request is present in the two-level cache and the two-level cache is active, and wherein the rest of the data is retrieved from the optical disk.

8. A method for storing data in non-volatile cache memory received from a plurality of optical disks, comprising the steps of:
defining data-control structures, comprising:
a first data structure (182) for storing a plurality of respective optical disk identification codes;
an index (182) pointing into said first data structure to identify a current optical disk;
an optical disk sector address (186) for data-request data specified in a current data request associated with said current optical disk; and
a second data structure (190) for mapping data-request data in said non-volatile cache memory to a location on an associated optical disk;
maintaining the index (182) to identify the current optical disk;
determining the optical disk sector address (186) from the current data request;
storing data-request data for the current data request in the non-volatile cache memory (100); and
updating (200, 202) said second data structure to enable the stored data-request data to be later accessed directly from the non-volatile cache memory.

9. The method of claim 8, in which the step of maintaining the index comprises the steps of:
identifying removal of a first optical disk from the optical disk drive;
identifying insertion of a second optical disk into the optical disk drive;
determining an identification code corresponding to said second optical disk;
checking the first data structure to determine whether said identification code is already present; and
when already present,then setting the index to refer to said already present identification code; and
when not already present, adding said identification code to said first data structure and setting the index to refer to said added identification code.

10. The method of claim 8, in which valid data stored in said first portion for a first optical disk remains valid and accessible following a change of optical disks from a second optical disk back to the first optical disk.

11. The method of claim 8, in which data stored in said first portion for a first optical disk remains valid and accessible once power is restored after either one of a power failure or power shutdown.

12. The method of claim 8, in which the step of storing comprises the steps of:
selecting address locations in the cache memory for the data-request data to overwrite (218,238) using first-in first-out criteria; and
storing (224) all data from a first data request in contiguous physical address locations.

13. The method of claim 12, further comprising for a second data request sequentially succeeding the first data request and specifying data on the optical disk adjacent to data from the first data request, the step of concatenating (224) all data from the second data request with the data from the first data request, so that succeeding first and second data requests to adjacent data are stored in contiguous address space within the cache memory (100).

14. The method of claim 12, further comprising for a second data request partially overlapping optical disk address space for the first data request, the step of updating the cache memory to store all data from the second data request so as to permit redundant storage of optical disk data.

15. A cache apparatus for storing data for an optical disk, comprising:
a first portion (104) of a non-volatile memory (60);
a digital processing means (20); and
wherein the digital processing means (20) allocates the first portion (104) to comprise:
a first area (252) for storing cached data organized into a plurality of groups of cached data;
a second data structure (256)for storing a marker and a plurality of optical disk sector addresses; and
wherein said digital processing means (20) executes a first computer program for recovering a substantial portion of stored cached data (252) after a restoration of power, the computer program comprising the step of:
determining the approximate number of valid optical storage device sectors stored in the first area (252);
defining a next marker (254) unique to all valid markers;
deriving a next location in the first area (252) for storing cached data; and
wherein said digital processing means executes a second computer program for processing a current data request for data-request data.

16. The cache apparatus of claim 15 which stores data for a plurality of optical disks and in which the first portion (104) is allocated to further comprise:
a third area (184) for storing a plurality of respective optical disk identification codes; and wherein the second area (256) further comprises means for associating an optical disk sector addresss to a corresponding optical disk.

17. The cache apparatus of claim 16, in which the first portion (104) forms a secondary cache, and further comprising a primary cache (102), the digital processing means allocating the primary cache (102) to comprise: (i) an index (182) pointing into said third area to identify a current optical disk; (ii) an optical disk sector address (186) for data specified by the current data request; and (iii) a look-up logical structure (190) for mapping data-request data in said first area (252) of said first portion (104) of non-volatile memory to a location on an associated optical disk; and in which said second computer program comprises the steps of:
identifying removal of a first optical disk from the optical disk drive;
identifying insertion of a second optical disk into the optical disk drive;
determining an identification code corresponding to said second optical disk;
checking the third area to determine whether said identification code is already present;
when already present,then setting the index to refer to said already present identification code;
when not already present, adding said identification code to said third area and setting the index to refer to said added identification code;
determining the optical disk sector address (186) from the current data request;
storing data-request data for the current data request in said first area (252) of said first portion (104) of non-volatile memory; and
updating said look-up logical structure (190) to enable the stored data-request data to be later accessed directly from the cache apparatus (100).

18. A caching method for storing data for an optical disk (70) in a non-volatile memory (104), comprising the steps of:
allocating first data structures comprising:
a first area (252) for storing cached data organized into a plurality of groups of cached data; and
a second data structure (256) for storing a marker and a plurality of optical disk sector addresses; and
determining the approximate number of valid optical storage device sectors stored in the first area (252);
defining a next marker (254) unique to all valid markers; and
deriving a next location in the first area (252) for storing cached data; and
processing a current data request for data-request data.

19. The caching method of claim 18 which stores data for a plurality of optical disks, and in which the allocated first data structures further comprise:
a third area (184) for storing a plurality of respective optical disk identification codes; and in which the second area (256) further comprises means for associating an optical sector address with a corresponding optical disk.

20. The caching method of claim 19 for storing data in a two-level cache (100) comprising a primary cache (102) and a secondary cache (104), the secondary cache (104) comprising non-volatile memory;
wherein the first data structures (252, 184, 254, 256) are allocated in secondary cache;
wherein second data structures are allocated in primary cache comprising:
an index (182) pointing into said third area (184) to identify a current optical disk;
an optical disk sector address (186) for data specified by the current data request; and
a look-up logical structure (190) for mapping data-request data in said first area (252) of said secondary cache (104) to a location on an associated optical disk (70).

21. The caching method of claim 20, further comprising the steps of:
maintaining said index to identify the current optical disk; and
wherein the step of processing a current data request comprises the steps of:
determining the optical disk sector address from the current data request; and
storing data-request data for the current data request in said first area (252) of said secondary cache; and
updating said look-up logical structure (190) to enable the stored data-request data to be later accessed directly from the cache apparatus.

22. The caching method of claim 21, in which the step of maintaining the index comprises the steps of:
identifying removal of a first optical disk from the optical disk drive;
identifying insertion of a second optical disk into the optical disk drive;
determining an identification code corresponding to said second optical disk;
checking the third area to determine whether said identification code is already present;
when already present,then setting the index to refer to said already present identification code; and
when not already present, adding said identification code to said third area and setting the index to refer to said added identification code.

23. A discriminatory cache apparatus for storing data requested from an optical disk mass storage device, comprising:
a two-level cache (100), comprising a primary cache (102) for storing data for a current optical disk (70) and a secondary cache (104) for storing data for a plurality of optical disks (70), the secondary cache (104) comprising a first portion of a hard disk drive (60), the hard disk drive (60) having either one or both of an access time or transfer rate rated faster than same for the optical disk drive (70); and
digital processing means (20) for executing a computer program (110) which processes a current optical disk data request comprising the steps of:
determining (114) using data-length-independent criteria whether the current data request is likely to improve optical disk access time;
using (116) the two-level cache for the current data request when said criteria indicates optical disk access time is likely to improve;
retrieving (126, 130) data specified by the current data request from the two-level cache when the two-level cache is used for the current data request and data requested is present in the two-level cache;
retrieving (118, 134) data specified by the current data request from the current optical disk when not retrieved from the two-level cache; and
for data retrieved from the current optical disk while the two-level cache is in use, updating (138) the two-level cache to enable future access to the retrieved data directly from the two-level cache.

24. The cache apparatus of claim 23, in which said step (114) of determining comprises the steps of:
deciding (150) whether the current data request is for data contiguous to data from a previous data request; and
deciding (154) whether optical disk I/O occurring within a prior first window of time exceeds a first throughput; and
wherein said criteria for the current data request indicates a likelihood of improved optical disk access time (152) for each one of the following conditions: (i) data for the current request is not contiguous with data from said previous data request; or (ii) the data for the current data request is contiguous and optical device I/O occurring within said prior first window does not exceed the first throughput.

25. The cache apparatus of claim 23, in which said step (114) of determining comprises the steps of:
estimating (160) optical disk access time for the current data request based upon data locations specified by the current data request and by a preceding data request in which the optical disk was accessed; and
wherein said criteria (162) for the current data request indicates a likelihood of improved optical disk access time (164) when the estimated access time is not within a first percentage of the hard disk drive access time.

26. The cache apparatus of claim 23, in which said step (114) of determining comprises the step of:
estimating (170) optical disk access time for the current data request based upon locations specified by the current data request and by a preceding data request in which the optical disk was accessed; and
deciding (174) whether optical disk I/O occurring within a prior first window of time exceeds a first throughput;
wherein said criteria for the current data request indicates a likelihood of improved optical disk access time (172) for the current data request for each of the following conditions: (i) the estimated access time is not within a first percentage of first storage device access time; or (ii) mass storage device I/O occurring within a prior first window of time does not exceed a first throughput.

27. A discriminatory cache apparatus for storing data requested from an optical disk mass storage device, comprising:
a two-level cache (100), comprising a primary cache (102) for storing data for a current optical disk (70) and a secondary cache (104) for storing data for a plurality of optical disks (70), the secondary cache (104) comprising a first portion of a hard disk drive (60), the hard disk drive (60) having either one or both of an access time or transfer rate rated faster than same for the optical disk drive (70); and
digital processing means (20) for executing a computer program (110) which processes a current optical disk data request comprising the steps of:
retrieving (126, 130) data specified by the current data request from the two-level cache when present in the two-level cache;
retrieving (118, 130) data specified by the current data request from the current optical disk when not retrieved from the two-level cache; and
for a current data request in which data is retrieved from the current optical disk, determining using data-length-independent criteria whether the current data request is likely to improve optical disk access time, and
when the data-length-independent criteria indicates that optical disk access time is likely to be improved, updating (138) the two-level cache to enable future access to the retrieved data directly from the two-level cache; and
when the data-length-independent criteria indicates that optical disk access time is not likely to be improved, not updating the two-level cache for the current data request.

28. The cache apparatus of claim 27, in which said step of determining comprises the steps of:
deciding (150) whether the data request is for data contiguous to data from a previous data request;
deciding (154) whether optical disk I/O occurring within a prior first window of time exceeds a first throughput;
wherein the criteria indicates a likelihood of improved optical disk access time (152) for each one of the following conditions: (i) data for the current request is not contiguous with data from said previous data request; or (ii) the data for the current data request is contiguous and optical device I/O occurring within said prior first window does not exceed the first throughput.

29. The cache apparatus of claim 27, in which said step of determining comprises the steps of:
estimating (160) optical disk access time for the current data request based upon data locations specified by the current data request and by a preceding data request in which the optical disk was accessed; and
wherein the criteria (162) indicates a likelihood of improved optical disk access time (164) when the estimated access time is not within a first percentage of the hard disk drive access time.

30. The cache apparatus of claim 27, in which said step of determining comprises the step of:
estimating (170) optical disk access time for the current data request based upon locations specified by the current data request and by a preceding data request in which the optical disk was accessed; and
deciding (174) whether optical disk I/O occurring within a prior first window of time exceeds a first throughput;
wherein the criteria indicates a likelihood of improved optical disk access time (172) for each one of the following conditions: (i) the estimated access time is not within a first percentage of first storage device access time; or (ii) mass storage device I/O occurring within a prior first window of time does not exceed a first throughput.

31. A method of discriminating among data requests to determine whether a current data request specifying data on a mass storage device is to be stored in cache, comprising the steps of:
deciding (150) whether the current data request is for data on the mass storage device contiguous to data from a previous mass storage device data request;
deciding (154) whether mass storage device I/O occurring within a prior first window of time exceeds a first throughput; and
storing (152) data for the current data request in cache upon satisfaction of either of the following conditions: (i) data for the current request is not contiguous with data from said previous mass storage device data request; or (ii) the data for the current request is contiguous with data from said previous mass storage device data request and mass storage device I/O occurring within said prior first window does not exceed the first throughput.

32. A method of discriminating among data requests to determine whether a current data request specifying data on a mass storage device is to be stored in cache, comprising the steps of:
estimating (160) access time for the mass storage device based upon locations of data specified by (i) the current data request and (ii) a preceding data request in which the mass storage device was accessed; and
storing (164) the data for the data request in cache if the estimated access time is not within a first percentage of first storage device access time.

33. A method of discriminating among data requests to determine whether a current data request specifying data on a mass storage device is to be stored in cache, comprising the steps of:
estimating (170) access time for the mass storage device based upon locations of data specified by (i) the data request and (ii) a preceding data request in which the mass storage device was accessed;
deciding (174) whether mass storage device I/O occurring within a prior first window of time exceeds a first throughput; and
storing (172) data for the current data request in the first portion upon satisfaction of either of the following conditions: (i) the estimated access time is not within a first percentage of first storage device access time; or (ii) mass storage device I/O occurring within a prior first window of time does not exceed a first throughput.
